# FASCICULE DE BREVET EUROPEEN

(11) **EP 3 304 697 B1**
(45) Date de publication et mention de la délivrance du brevet: **29.01.2020**
(21) Numéro de dépôt: 16729319.0
(22) Date de dépôt: 25.05.2016
(51) Int. Cl.: H02K 1/18, H02K 5/04, H02K 5/173, H02K 5/18, H02K 5/20, H02K 5/24, H02K 9/04, H02K 9/19, H02K 9/22, H02K 11/04

(54) **MACHINE ELECTRIQUE TOURNANTE MUNIE D'UN MODULE ELECTRONIQUE DE REDRESSEMENT DEPORTE**
ELEKTRISCHE DREHMASCHINE MIT VERSETZTEM ELEKTRONISCHEM GLEICHRICHTERMODUL
ROTATING ELECTRICAL MACHINE EQUIPPED WITH AN OFFSET ELECTRONIC RECTIFIER MODULE

(30) Priorité: 27.05.2015 FR 1554741; 27.05.2015 FR 1554743; 27.05.2015 FR 1554744; 27.05.2015 FR 1554747
(43) Date de publication de la demande: 11.04.2018
(73) Titulaire: VALEO EQUIPEMENTS ELECTRIQUES MOTEUR, 94046 Créteil Cedex (FR)
(72) Inventeur: BALTHAZE, Patrice, 62630 Etaples-sur-Mer (FR); DELIANNE, Henri, 62630 Etaples-sur-Mer (FR); BILTERYST, Pierre-Yves, 62630 Etaples-sur-Mer (FR); MARGUERITTE, David, 62630 Etaples-sur-Mer (FR); BOCQUEL, Michel, 62630 Etaples-sur-Mer (FR); JOZEFOWIEZ, Eric, 62630 Etaples-sur-Mer (FR); PERREAUT, Sylvain, 62630 Etaples-sur-Mer (FR)
(86) Numéro de dépôt international: PCT/FR2016/051228
(87) Numéro de publication internationale: WO 2016/189247

(56) Documents cités:
- EP-A1- 1 538 730
- EP-A1- 1 925 068
- EP-A2- 2 549 629
- DE-U1- 7 923 599
- GB-A- 919 310
- JP-A- H0 699 745
- JP-A- H08 205 461
- JP-A- H09 140 082
- JP-A- H11 341 743
- JP-A- 2010 057 266

## Description

La présente invention porte sur une machine électrique tournante munie d'un module électronique de redressement déporté. L'invention trouve une application particulièrement avantageuse, mais non exclusive, dans le domaine des alternateurs pour véhicule automobile. Un tel alternateur transforme de l'énergie mécanique en énergie électrique et peut être réversible. Un tel alternateur réversible est appelé alterno-démarreur et permet de transformer de l'énergie électrique en énergie mécanique notamment pour démarrer le moteur thermique du véhicule. L'invention pourra également être mise en œuvre avec un moteur de type électrique.

De façon connue en soi, un alternateur tel que décrit dans le document EP0762617 comporte un carter et, à l'intérieur de celui-ci, un rotor à griffes, solidaire en rotation de manière directe ou indirecte d'un arbre, et un stator qui entoure le rotor avec présence d'un entrefer. Une poulie est fixée sur l'extrémité avant de l'arbre.

Le stator comporte un corps en forme d'un paquet de tôles doté d'encoches équipées d'isolant d'encoches pour le montage du bobinage du stator. Le bobinage comporte une pluralité d'enroulements de phase traversant les encoches du corps et formant, avec tous les enroulements de phase, un chignon avant et un chignon arrière de part et d'autre du corps du stator. Les enroulements sont obtenus par exemple à partir d'un fil continu recouvert d'émail ou à partir d'éléments conducteurs en forme de barre, tels que des épingles en forme de U dont les extrémités sont reliées entre elles par exemple par soudage.

Ces enroulements de phase sont par exemple des enroulements triphasés connectés en étoile ou en triangle, dont les sorties sont reliées à au moins un module électronique de redressement comportant des éléments redresseurs tels que des diodes ou des transistors du type MOSFET, notamment lorsqu'il s'agit d'un alterno-démarreur.

Par ailleurs, le rotor comporte deux roues polaires. Chaque roue présente un flasque d'orientation transversale pourvu à sa périphérie externe de dents par exemple de forme trapézoïdale et d'orientation axiale. Les dents d'une roue sont dirigées axialement vers le flasque de l'autre roue, la dent d'une roue polaire pénétrant dans l'espace existant entre deux dents voisines de l'autre roue polaire, de sorte que les dents des roues polaires soient imbriquées les unes par rapport aux autres. Un noyau cylindrique est intercalé axialement entre les flasques des roues. Ce noyau porte à sa périphérie externe un bobinage d'excitation bobiné dans un isolant intercalé radialement entre le noyau et ce bobinage.

En outre, le carter comporte des paliers avant et arrière assemblés ensemble. Le palier arrière porte le porte-balais, le régulateur de tension et au moins un pont redresseur. Les paliers sont de forme creuse et portent chacun centralement un roulement à billes pour le montage à rotation de l'arbre du rotor.

Les documents JP 2010057266 et GB 919310 décrivent des structures de machine électrique tournante où l'ensemble électronique est déporté radialement par rapport au carter de la machine. De plus, les documents JP H09 140082 et DE 7923599 décrivent des structures de machine électrique tournante où le carter est formé par deux berceaux.

L'invention vise à améliorer la configuration des machines électriques existantes. A cet effet, l'invention propose une machine électrique tournante, comprenant un stator muni d'une culasse et un rotor monté sur un arbre, ladite machine électrique tournante comprenant en outre un berceau comportant une surface de portée du stator, un organe de maintien du stator comportant une clame, un capot de forme complémentaire au berceau, le capot fermant ledit berceau et un module électronique de redressement déporté radialement par rapport à ladite culasse, ledit module électronique de redressement s'étendant dans une surface d'un cylindre de révolution centré sur un axe du stator parallèle à la culasse et situé à une distance radiale de l'axe du stator supérieure à celle de ladite culasse et étant monté sur l'organe de maintien du stator ou sur le capot.

L'invention permet ainsi de réduire l'encombrement axial de la machine électrique, ce qui facilite son implantation dans la zone sous capot du véhicule. L'invention permet en outre de faciliter l'interconnexion entre les entrées et les sorties de phase avec le module électronique de redressement de la machine, en minimisant la distance entre le dispositif de redressement et les sorties de phases.

Selon une réalisation, ledit berceau comporte en outre au moins deux portées de guidage en rotation de l'arbre du rotor positionnées axialement respectivement de part et d'autre de ladite surface de portée du stator.

Selon une réalisation, ledit berceau délimite un volume ouvert tel que l'ensemble stator, arbre et rotor puisse être déposé respectivement en appui sur ladite surface de portée et lesdites portées de guidage suivant une direction de montage perpendiculaire à un axe du berceau.

Selon une réalisation, des sorties de phase d'un bobinage sont réparties aux deux extrémités axiales du stator. On obtient ainsi de la flexibilité pour les sorties de phases, c'est-à-dire qu'il est possible de répartir les sorties des deux côtés axiaux du stator. Dans le cas particulier d'un bobinage ondulé réparti, on minimise ainsi les contraintes, car il n'est plus nécessaire de tourner autour de deux encoches pour sortir les phases d'un même côté.

Selon une réalisation, des sorties de phase d'un bobinage sont courbées par rapport à l'axe du stator d'un angle compris entre 45 et 120 degrés.

Selon une réalisation, lesdites sorties de phase sont courbées par rapport à l'axe du stator d'un angle de 90 degrés.

Selon une réalisation, ladite clame du stator est montée rotative par rapport audit berceau via une charnière.

Selon une réalisation, lorsque ledit module électronique de redressement est monté sur ledit organe de maintien du stator, ledit organe de maintien est apte à refroidir par conduction le module électronique de redressement.

Selon une réalisation, l'organe de maintien comprend un dispositif de refroidissement pour évacuer des calories de l'organe de maintien.

Selon une réalisation, le dispositif de refroidissement comprend des conduits ménagés dans l'organe de maintien pour permettre une circulation d'un liquide de refroidissement.

Selon une réalisation, le dispositif de refroidissement comprend des moyens de refroidissement par convection comportant des ailettes.

Selon une réalisation, ladite machine comporte un régulateur de tension monté sur ledit capot.

Selon une réalisation, ledit module électronique de redressement est monté sur ledit capot.

Selon une réalisation, le capot comporte des canaux de refroidissement dans lequel circule un liquide de refroidissement

Selon une réalisation, ledit capot comporte des traces surmoulées destinées à être reliées électriquement audit module électronique de redressement.

Selon une réalisation, ledit arbre est monté sur chaque portée de guidage via un roulement et en ce que la machine électrique tournante comprend en outre au moins un dispositif de maintien de roulement.

Selon une réalisation, la machine électrique tournante comprend des moyens générateurs d'un flux d'air axial forcé aptes à générer un flux d'air s'évacuant radialement après avoir refroidi par convection le module électronique de redressement.

Selon une réalisation, les moyens générateurs d'un flux d'air axial forcé comportent au moins un ventilateur monté sur ledit rotor apte à aspirer axialement de l'air frais pour le refouler vers ledit module électronique de redressement.

Selon une réalisation, la machine électrique tournante comporte un radiateur annulaire rapporté pour refroidir l'air pénétrant dans la machine de chaque côté du berceau.

L'invention sera mieux comprise à la lecture de la description qui suit et à l'examen des figures qui l'accompagnent. Ces figures ne sont données qu'à titre illustratif mais nullement limitatif de l'invention.
La figure 1 montre une vue en perspective éclatée d'un alternateur selon la présente invention sans le capot de protection;
La figure 2 montre une vue en perspective éclatée d'un alternateur selon la présente invention avec le capot de protection;
La figure 3 montre une vue en perspective d'un alternateur selon la présente illustrant la circulation du flux d'air à l'intérieur de la machine électrique;
La figure 4a est une vue en coupe longitudinale d'un alternateur selon la présente invention dans lequel le stator présente une configuration "enterrée" par rapport au fond du berceau;
La figure 4b est une vue en coupe longitudinale d'un alternateur selon la présente invention dans lequel le stator présente une configuration "surélevée" par rapport au fond du berceau;
La figure 5 montre une vue de face du stator de l'alternateur selon la présente invention muni d'une profondeur d'encoches optimisée;
La figure 6 est une vue en perspective du berceau de la machine électrique selon la présente invention;
La figure 7 est une vue en perspective du berceau de la figure 6 dans lequel a été inséré un stator;
Les figures 8a à 8d sont des vues en perspective illustrant différentes configurations possibles des zones d'appui du stator;
La figure 9a est une vue de côté du berceau de l'alternateur selon la présente invention muni d'ailettes de refroidissement;
La figure 9b est une vue de côté du berceau de l'alternateur selon la présente invention montrant les zones dans lesquelles les ailettes de refroidissement peuvent être intégrées;
Les figures 10a et 10b sont respectivement des vues de dessous et de côté d'un berceau selon la présente invention muni de plots de référence permettant un repérage de la pièce lors d'une phase d'usinage;
Les figures 11a à 11d sont des vues en perspective du fond du berceau illustrant différentes configurations des éléments d'amortissement du stator;
Les figures 12a à 12d sont des vues en perspective du fond du berceau illustrant différentes configurations de creusures prévues pour l'intégration d'éléments d'amortissement du stator;
La figure 13 est une vue de dessus d'un berceau selon la présente invention muni de butées d'arrêt pour les roulements à billes implantées dans les portées de guidage en rotation de l'arbre;
La figure 14 est une vue de face d'un stator de l'alternateur selon la présente invention muni d'une excentricité par rapport à son diamètre intérieur pour permettre un ajustement de l'axe du stator par rapport à l'axe du rotor;
La figure 15 est une vue de face d'une clame de maintien du stator de l'alternateur selon la présente invention;
La figure 16 est une vue de dessus d'une clame de maintien du stator appartenant à l'alternateur selon la présente invention;
Les figures 17a et 17b sont des vues en perspective illustrant la mise en œuvre de moyens d'indexage de la clame de maintien du stator par rapport au berceau;
La figure 18 est une vue en perspective de dessous de la clame de maintien du stator de l'alternateur selon la présente invention munie de plot d'indexage par rapport au berceau;
La figure 19 est une vue en perspective d'une clame de maintien du stator selon la présente invention munie d'une rainure pour indexer en position le corps du stator;
La figure 20a est une vue de côté d'une clame de maintien du stator selon la présente invention munie d'ailettes de refroidissement en périphérie externe;
La figure 20b est une vue en perspective détaillée de la forme des ailettes de la clame de maintien du stator de la figure 20a;
La figure 21 est une vue en perspective d'une clame de maintien du stator selon la présente invention intégrant un circuit de refroidissement;
La figure 22 est une vue de dessus d'un organe de maintien du stator selon la présente invention comportant deux clames côte à côte;
La figure 23 est une vue de côté d'un alternateur selon la présente invention muni d'une clame de maintien du stator monté rotative par rapport au berceau via une charnière;
Les figures 24a et 24b montrent des vues en perspective d'une clame de maintien du stator selon l'invention illustrant différentes configuration d'implantation d'élément d'amortissement assurant une fonction d'anti-vibration;
Les figures 25a à 25c sont des vues de côtés de différents modes de réalisation d'une clame de maintien du stator selon l'invention permettant de réaliser une fonction d'anti-vibration et de maintien axial du stator;
Les figures 26a et 26b illustrent une premier mode de fixation sur le berceau d'un stator muni d'excroissances selon la présente invention;
La figure 27 illustre un deuxième mode de fixation sur le berceau d'un stator muni d'excroissances selon la présente invention;
La figure 28 illustre un troisième mode de fixation sur le berceau d'un stator muni d'excroissances selon la présente invention;
La figure 29 illustre un quatrième mode de fixation sur le berceau d'un stator muni d'excroissances selon la présente invention;
La figure 30 est une vue en perspective d'un corps de stator selon la présente invention muni d'une excroissance pour l'indexage par rapport au berceau et/ou à la clame de maintien du stator;
Les figures 31a et 31b sont respectivement des vues en perspective et de face d'un dispositif de maintien d'un roulement selon la présente invention;
La figure 32 est une vue en perspective du dispositif de maintien de roulement montée sur la paroi latérale du berceau représenté partiellement;
La figure 33 est une vue de face du dispositif de maintien de roulement intégrant un moyen d'indexage par rapport au berceau de l'alternateur selon la présente invention;
La figure 34 est une vue en coupe du dispositif de maintien de roulement selon la présente invention intégrant un système de butée de roulement;
La figure 35 est une vue en coupe partielle d'un roulement utilisé avec le dispositif de maintien de la figure 34 dans lequel est ménagée une rainure;
Les figures 36a et 36b sont respectivement des vues en perspective et de côté d'un dispositif de maintien de roulement muni d'ailettes de refroidissement en périphérie externe;
Les figures 37a à 37c sont des vues de côté du dispositif de maintien de roulement selon la présente invention illustrant des variantes de réalisation des ailettes de refroidissement;
La figure 38 est une vue en perspective du capot de protection de l'alternateur selon la présente invention;
La figure 39 est une vue en perspective de l'alternateur selon la présente invention muni d'un module électronique de redressement déporté radialement sur la clame de maintien du stator;
Les figures 40a et 40b sont des vues en coupe illustrant les différents positionnements possibles des sorties de phase du bobinage d'un stator utilisé dans l'alternateur selon la présente invention;
La figure 41 est une vue de côté d'un alternateur selon la présente invention montrant le positionnement des porte-balais;
La figure 42 est une vue en perspective d'un exemple de réalisation d'un ventilateur destiné à être fixé contre une face d'extrémité du rotor;
Les figures 43a et 43b sont des vues en perspective illustrant des variantes de réalisation de l'alternateur muni d'un capot comportant respectivement une seule ou deux entrées d'air.

Les éléments identiques, similaires, ou analogues conservent la même référence d'une figure à l'autre.

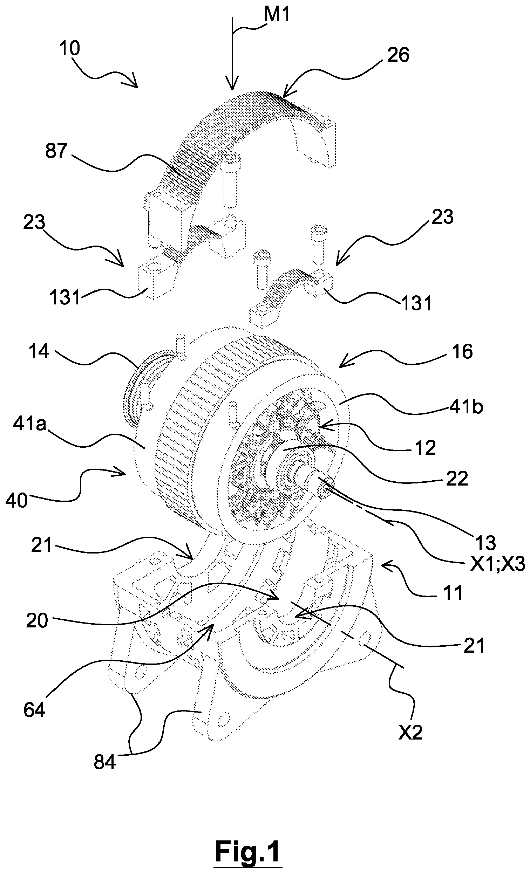

On a représenté sur les figures 1, 2, 3, 4a, et 4b, un alternateur 10 compact et polyphasé selon la présente invention, notamment pour véhicule automobile. Cet alternateur 10 transforme de l'énergie mécanique en énergie électrique et peut être réversible. Un tel alternateur 10 réversible est appelé alterno-démarreur et permet de transformer de l'énergie électrique en énergie mécanique notamment pour démarrer le moteur thermique du véhicule.

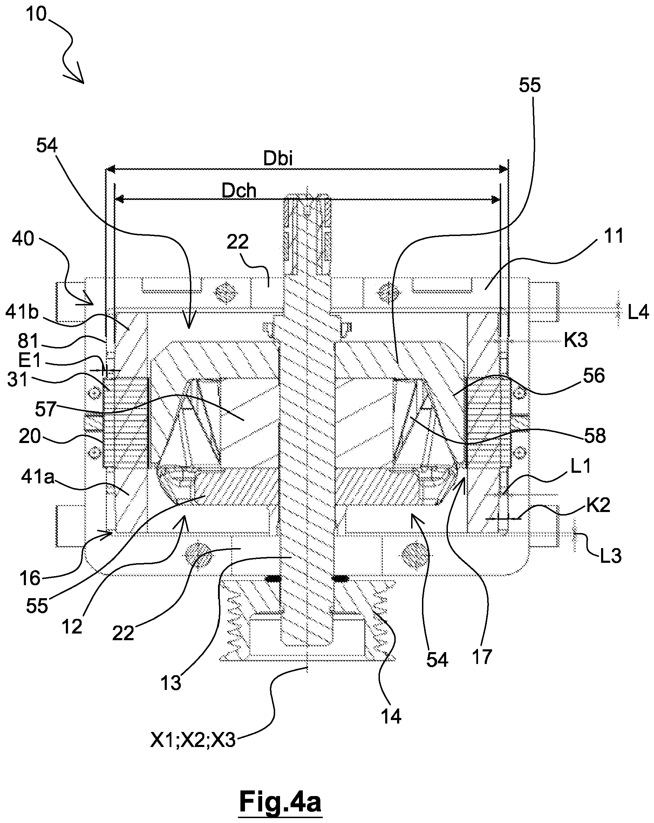

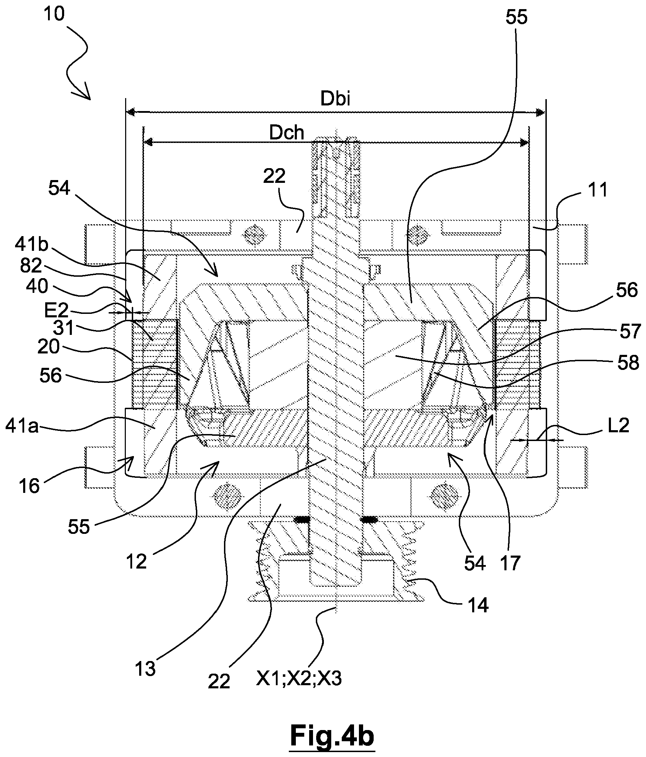

Cet alternateur 10 comporte un berceau 11 et un rotor 12 à griffes, solidaire en rotation de manière directe ou indirecte d'un arbre 13. En outre, un stator 16 entoure le rotor 12 avec présence d'un entrefer 17 visible sur les figures 4a et 4b. L'axe X1 de l'arbre 13 forme l'axe de rotation du rotor 12. L'arbre 13 porte à une de ses extrémités une poulie 14 appartenant à un dispositif de transmission de mouvements à au moins une courroie entre l'alternateur 10 et le moteur thermique du véhicule automobile.

En l'occurrence, le berceau 11 d'axe X2 comporte une surface de portée 20 du stator 16 sur laquelle repose au moins en partie le stator 16 et au moins deux portées de guidage 21 en rotation de l'arbre 13 du rotor 12 positionnées respectivement de part et d'autre axialement de la surface de portée 20 du stator 16. L'arbre 13 est monté sur chaque portée de guidage 21 via un roulement 22, en sorte que l'arbre 13 est monté rotatif par rapport au berceau 11. Des dispositifs de maintien 23 de roulement sont prévus pour maintenir en position les roulements 22 sur les portées de guidage 21 en rotation de l'arbre 21. En variante, les roulements 22 pourront être remplacés par des paliers lisses, en sorte que chaque élément 22 pourra être considéré plus généralement comme un système de guidage en rotation de l'arbre 13.

En outre, un organe de maintien 26 du stator 16 est configuré pour maintenir serrée une culasse 35 du stator 16 entre la surface de portée 20 du stator 16 et l'organe de maintien 26. Le berceau 11 est fermé par un capot de protection 30 de forme complémentaire décrit plus en détails ci-après.

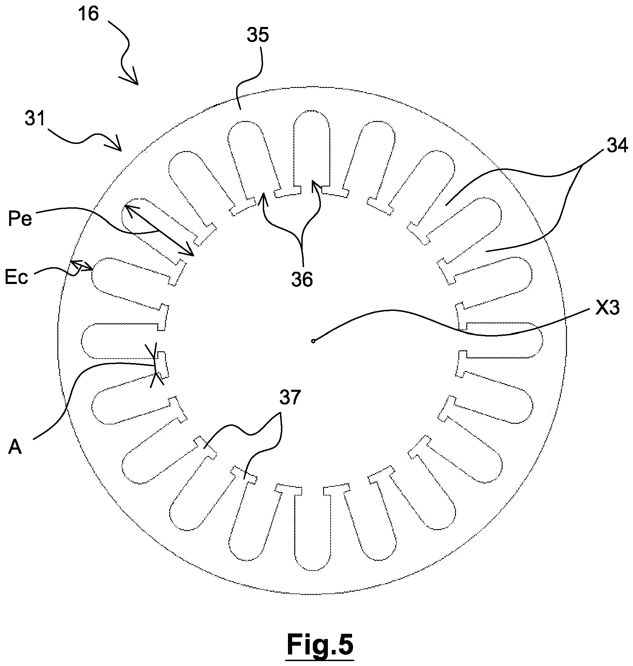

Plus précisément, comme on peut le voir sur la figure 5, le stator 16 d'axe X3 comporte un corps 31 ayant une forme cylindrique annulaire d'axe X3 et consiste en un empilement axial de tôles planes. Le corps 31 comporte des dents 34 réparties angulairement de manière régulière sur une périphérie interne de la culasse 35. Ces dents 34 délimitent deux à deux des encoches 36. La culasse 35 correspond à la portion annulaire externe pleine du corps 31 qui s'étend entre le fond des encoches 36 et la périphérie externe du stator 16.

Les encoches 36 débouchent axialement dans les faces d'extrémité axiales inférieure et supérieure du corps 31. Les encoches 36 sont également ouvertes radialement dans la face cylindrique interne du corps 31. Le stator 16 est de préférence muni de pied de dents 37 du côté des extrémités libres des dents 34 afin d'assurer une fermeture au moins partielle des encoches.

En outre, un bobinage 40 bien visible sur les figures 1, 4a et 4b comporte une pluralité d'enroulements de phase traversant les encoches 36 du corps 31 du stator 16 et formant, avec toutes les phases, un chignon avant 41a et un chignon arrière 41b de part et d'autre du corps 31 du stator 16. Dans la suite de la description, on considère qu'un élément "avant" est tourné du côté de la poulie 14 et qu'un élément "arrière" est tourné du côté opposé.

Par exemple, un stator 16 "hexaphasé" comporte six enroulements de phase. L'invention est cependant applicable à des stators 16 comportant un nombre différent d'enroulements de phase, et notamment à des stators "triphasés" comportant trois enroulements de phase, ou des stators pentaphasés comportant cinq enroulements de phase ou heptaphasés comportant sept enroulements de phase. Le nombre d'encoches 36 du stator 16 est de préférence adapté en fonction du nombre d'enroulements de phase de la machine électrique 10.

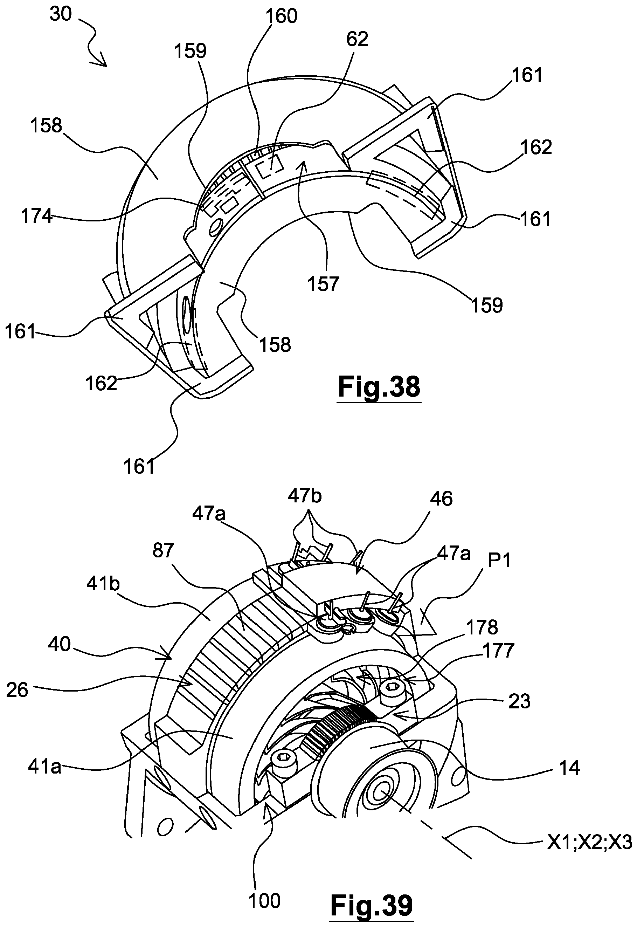

Les enroulements sont obtenus par exemple à partir d'un fil continu recouvert d'émail ou à partir d'éléments conducteurs en forme de barre, tels que des épingles en forme de U dont les extrémités sont reliées entre elles par exemple par soudage. Ces enroulements sont par exemple des enroulements connectés en étoile ou en triangle, dont les sorties sont reliées à un module électronique de redressement 46 (cf. figure 39) décrit plus en détails ci-après. Le module électronique de redressement 46 comporte des éléments redresseurs 47, tels que des diodes ou des transistors du type MOSFET, notamment lorsqu'il s'agit d'un alterno-démarreur.

L'utilisation de l'organe de maintien 26 permet de supprimer la fonction mécanique de la culasse 35 et donc les contraintes associées. La culasse 35 peut alors être dimensionnée pour optimiser les performances électromagnétiques de la machine. En particulier, l'invention permet d'augmenter la profondeur Pe des encoches 36 afin d'augmenter le taux de remplissage des encoches 36 du stator 16 en conducteurs et donc le courant débité par la machine. On rappelle ici que la profondeur Pe de chaque encoche 36 est définie entre la périphérie interne du stator 16 côté rotor 12 et le fond d'encoche. L'épaisseur Ec de la culasse 35, définie comme la distance radiale entre le fond d'encoche et la périphérie externe du stator 16, pourra également être réduite si besoin afin d'optimiser l'encombrement de l'ensemble. Alternativement, à surface d'encoche constante, il sera possible d'augmenter la largeur orthoradiale des dents 34 de manière à permettre une remontée de débit plus importante.

En outre, l'alternateur 10 est configuré de telle façon que le flux magnétique remonté par les dents 34 de chaque phase peut traverser la culasse 35 sans saturation magnétique. A cet effet, les dents 34 présentent chacune une largeur de dent A, ladite épaisseur Ec de culasse 35 est supérieure ou égale à K*A, avec K correspondant au nombre de phases de la machine électrique. Dans le cas où les encoches 36 sont à bords parallèles, l'épaisseur Ec de la culasse 35 considérée est mesurée au niveau d'un pied de dent 37, c'est-à-dire à l'endroit où la largeur de dent A est la plus faible.

Par ailleurs, comme cela est visible sur les figures 4a et 4b, le rotor 12 comporte deux roues polaires 54. Chaque roue 54 présente un flasque 55 d'orientation transversale pourvu à sa périphérie externe de dents 56 par exemple de forme trapézoïdale et d'orientation axiale. Les dents 56 d'une roue 54 sont dirigées axialement vers le flasque 55 de l'autre roue 54, la dent 56 d'une roue polaire 54 pénétrant dans l'espace existant entre deux dents 56 voisines de l'autre roue polaire 54, de sorte que les dents 56 des roues polaires 54 soient imbriquées. La périphérie externe des dents 56 est d'orientation axiale et définit avec la périphérie interne du corps 31 du stator 16 l'entrefer 17 entre le stator 16 et le rotor 12. La périphérie interne des dents 56 est inclinée. Ces dents 56 sont moins épaisses à leur extrémité libre. Les flasques 55 des roues 54 sont de forme annulaire. Un noyau cylindrique 57 est intercalé axialement entre les flasques 55 des roues 54.

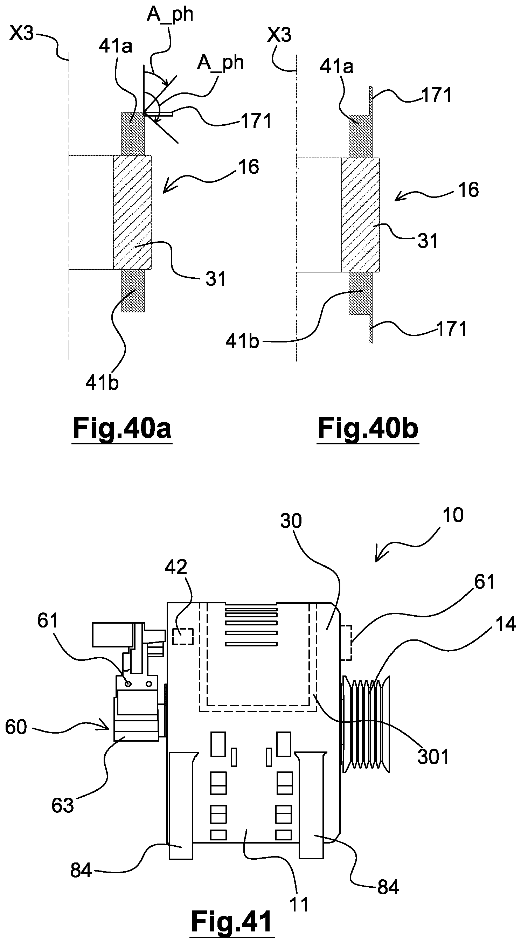

Ce noyau 57 porte à sa périphérie externe un bobinage d'excitation 58 bobiné dans un isolant intercalé radialement entre le noyau 57 et ce bobinage 58. Dans l'exemple décrit, cet isolant est en matière électriquement isolante et moulable, telle que de la matière plastique, tandis que les roues polaires 54 et le noyau 57 sont métalliques en étant ici en matière ferromagnétique, telle que de l'acier doux. L'arbre 13 est également métallique en étant en matériau ferromagnétique, tel que de l'acier, plus dur que les roues polaires 54 et le noyau 57 du rotor à griffes 12. Le bobinage monté sur le noyau 57 est alimenté via un régulateur 62 de tension qui pourra être monté sur le capot comme illustré en figures 38 et 41.

Comme cela est visible sur la figure 41, des balais 60 appartenant à un ou plusieurs porte-balais 61 sont disposés de façon à frotter sur des bagues collectrices 63. Le porte-balais 61 est relié électriquement au régulateur 62 de tension. Lorsque le bobinage d'excitation 58 est alimenté électriquement à partir des balais 60, le rotor 12 est magnétisé et devient un rotor 12 inducteur avec formation de pôles magnétiques Nord-Sud au niveau des griffes et donc des dents 56 des roues polaires 54. Ce rotor 12 inducteur crée un courant induit alternatif dans le stator 16 induit lorsque l'arbre 13 tourne. Le module électronique de redressement 46 permet alors de transformer le courant alternatif induit en un courant continu, notamment pour alimenter les charges et les consommateurs du réseau de bord du véhicule automobile, ainsi que pour recharger la batterie du véhicule. Ce rotor 12 pourra comporter des aimants permanents interposés entre deux dents 56 voisines à la périphérie externe du rotor 12. Ces aimants pourront être réalisés en terre rare ou en ferrite. En variante, le rotor 12 peut être dépourvu de tels aimants.

Par ailleurs, comme cela est bien visible sur la figure 1, le berceau 11 délimite un volume ouvert 64 tel, que l'ensemble stator 16, arbre 13 et rotor 12 puisse être déposé respectivement en appui sur la surface de portée 20 et les portées de guidage 21 suivant une direction de montage M1 perpendiculaire à l'axe X2 du berceau 11. Le montage est tel que, alors que le stator 16 repose sur la surface de portée 20, l'axe X3 du stator 16 est confondu avec l'axe X2 du berceau 11. En outre, alors que l'arbre 13 de rotor 12 repose sur les portées de guidage 21, l'axe X1 du rotor 12 est confondu avec l'axe X3 du stator 16 et l'axe X2 du berceau 11.

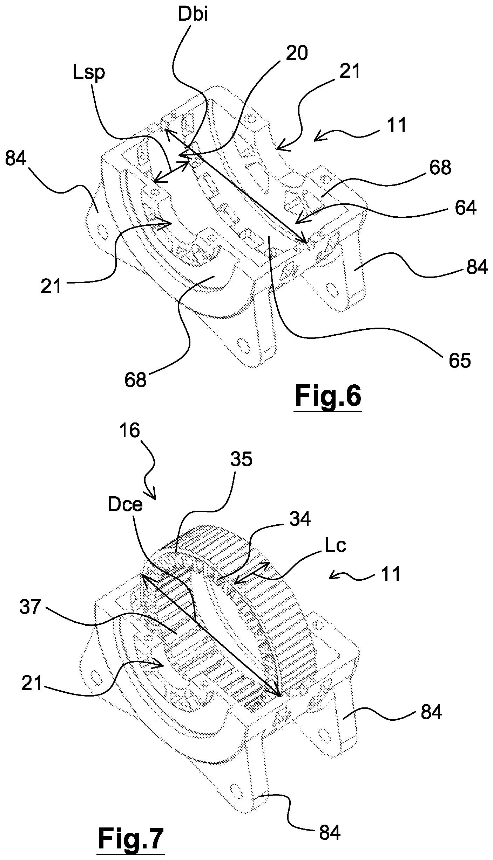

A cet effet, comme on peut le voir sur les figures 6 et 7, le berceau 11 comporte une portion centrale 65 délimitée à ses extrémités axiales par deux parois latérales 68 en forme de portion de disque comprenant chacune une portée de guidage 21 de l'arbre 13. La portion centrale 65 en forme de portion de cylindre s'étend suivant un angle de révolution de l'ordre de 180 degrés. Plus généralement, le berceau 11 pourra s'étendre suivant un premier angle égal ou inférieur à 180 degrés. Dans un exemple particulier, afin de minimiser la quantité de matière utilisée pour réaliser la machine, le berceau 11 s'étend suivant un angle inférieur à 170 degrés.

La portion centrale 65 du berceau 11 présente une forme délimitée par deux cercles concentriques, ce qui permet de limiter la quantité de matière utilisée pour la réalisation de la machine électrique. Seule la forme de la périphérie interne de la portion centrale du berceau est imposée pour recevoir le stator 16. En conséquence, en variante, la périphérie externe de la portion centrale 65 pourra présenter une autre forme telle qu'une forme rectangulaire. Le diamètre Dbi de la périphérie interne du berceau 11 et donc de la périphérie interne de la portion centrale 65 du berceau 11 correspond au diamètre Dce externe de la culasse 35 du stator 16. En outre, une largeur axiale Lsp de la surface de portée 20 correspond de préférence à la largeur axiale Lc de la culasse 35 du stator 16.

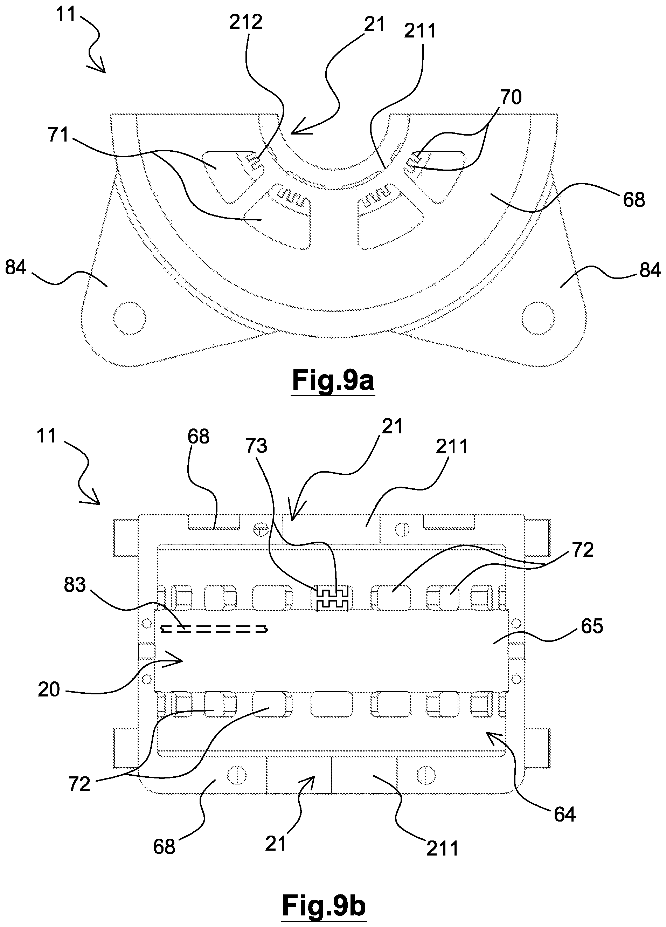

Par ailleurs, les portées de guidage 21 ménagées dans les parois latérales 68 du berceau 11 délimitent des portions de cylindre. Les portions de cylindres s'étendent sur environ 180 degrés et dans tous les cas suivant un angle supérieur à 170 degrés. Les diamètres des portées de guidage 21 pourront être égaux ou différents pour s'adapter aux différences de diamètre de l'arbre 13 et des roulements 22 correspondants. Comme cela est illustré sur la figure 9a, les portées de guidage 21 comportent une face 211 recevant le roulement 22 ayant une largeur correspondant sensiblement à la largeur de la bague externe des roulements 22. Une face opposée 212 des portées de guidage 21 pourra comporter de préférence des ailettes 70 de refroidissement s'étendant à l'intérieur d'ouvertures 71 réalisées dans les parois latérales 68 pour autoriser le passage d'un flux d'air généré par des ventilateurs 178 fixés sur les extrémités axiales du rotor 12 comme cela est expliqué plus en détails ci-après. On augmente ainsi la durée de vie des roulements à billes 22.

Comme on peut le voir sur la figure 9b, la portion centrale 65 pourra également comporter des ouvertures 72 traversantes réalisées dans sa paroi. Deux séries d'ouvertures 72 pourront être par exemple respectivement réalisées de part et d'autre de la surface de portée 20, afin de permettre le passage du flux d'air de refroidissement de la machine 10. Des ailettes 73 de refroidissement pourront également être réalisées de manière à s'étendre au moins en partie l'intérieur de ces ouvertures 72. Les ailettes 70, 73 viennent de matière avec le berceau 11 en sorte que les ailettes 70, 73 peuvent être usinées en même temps que le berceau 11. Alternativement, les ailettes 70, 73 sont rapportées par rapport au berceau 11.

Le berceau 11 est de préférence monobloc, c'est-à-dire que ses différentes parties du berceau 11 sont réalisées d'un seul tenant. Le berceau 11 pourra à cet effet être obtenu par fonderie. Le berceau 11 est de préférence réalisé dans un matériau métallique conducteur de chaleur, comme par exemple à base d'aluminium.

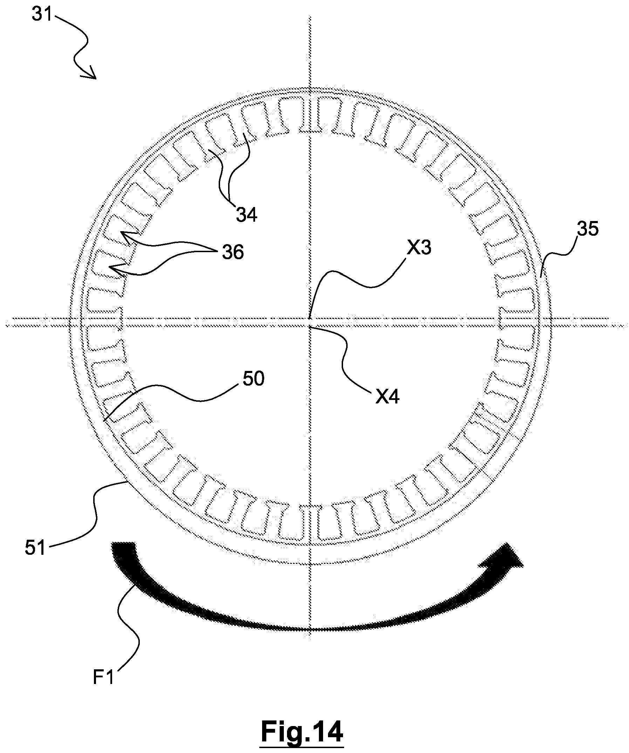

Suivant le mode de réalisation montré sur la figure 14, la culasse 35 du stator 16 présente une périphérie interne 50 et une périphérie externe 51. Ces périphéries interne 50 et externe 51 sont excentrées l'une par rapport à l'autre. Ainsi l'axe X3 de la périphérie interne 50 (qui correspond à l'axe du stator 16) est décalé par rapport à l'axe X4 de la périphérie externe 51. La périphérie externe 51 de la culasse 35 est agencée dans le berceau 11, de telle sorte que l'axe X3 de la périphérie interne 50 est coaxial avec l'axe X1 du rotor 12. La culasse 35 est orientée angulairement autour de l'axe X2 du berceau 11, suivant la flèche F1, de façon que l'axe X3 de la périphérie interne 50 soit coaxial avec l'axe X1 du rotor 12 et avec l'axe X2 du berceau. La périphérie externe 51 de la culasse 35 est usinée pour présenter ladite excentricité. Une telle configuration permet ainsi de garantir la co-axialité des différents éléments de la machine tout en minimisant l'entrefer 17.

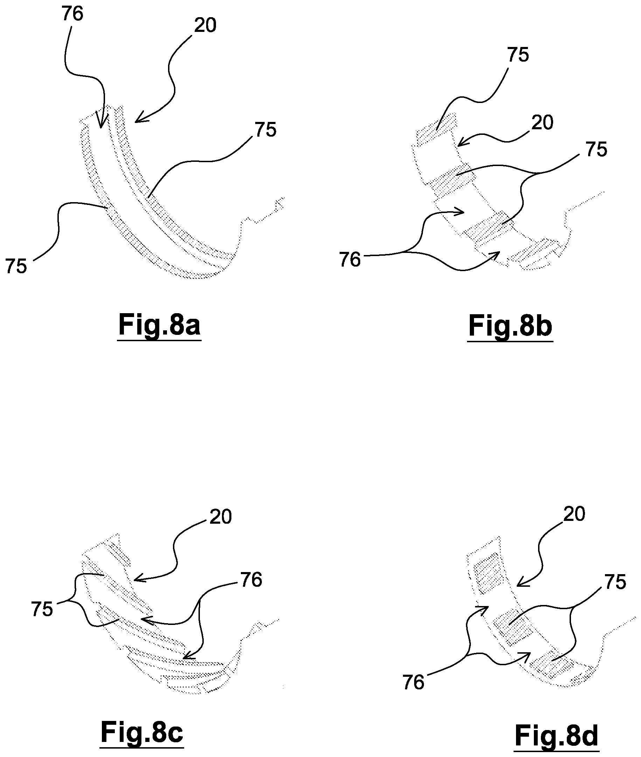

La périphérie interne du berceau 11 est en contact au moins localement, via la surface de portée 20, avec la périphérie externe de la culasse 35 du stator 16. Le berceau 11 présente une seule ou plusieurs zones d'appui 75 continues du stator 16 ménagées dans la surface de portée 20 du stator 16, comme cela est illustré par les figures 8a à 8d. Un ratio entre la surface des zones d'appui 75 et la surface de portée 20 est par exemple compris entre 5% et 100%. La chaleur générée par le stator 16 est évacuée par conduction par le berceau 11 du fait du contact thermique entre les deux éléments.

Dans le cas où le berceau 11 présente plusieurs zones d'appui 75, il est possible de prévoir une zone de passage de flux d'air entre le stator 16 et le berceau 11. Cette zone peut être brassée par l'air provenant des ventilateurs 178 ou d'une source de ventilation externe. En outre, il est possible de faire passer des connectiques ou mettre en place des sondes de température, par exemple de type CTN, dans les espaces 76 entre deux zones d'appui 75 consécutives afin de mesurer la température du stator 16. Cela permet également de diminuer les coûts d'usinage du fait de la faible surface à usiner. Les zones d'appui 75 pourront présenter par exemple la forme de deux bandes annulaire en saillie s'étendant suivant les deux bords d'extrémité axiaux de la surface de portée 20 du berceau (cf. figure 8a). Dans le mode de réalisation de la figure 8b, les zones d'appui 75 sont formées par des nervures allongées s'étendant suivant toute la largeur de la surface de portée 20. Dans le mode de réalisation de la figure 8c, les zones d'appui 75 sont formées par des portions d'hélice en saillie. Dans le mode de réalisation de la figure 8d, les zones d'appui 75 sont formées par des protubérances de forme sensiblement carrée centrées par rapport à la surface de portée 20 et espacées entre elles de manière régulière. Ces exemples ne sont bien entendu pas limitatifs et les zones d'appui 75 pourront présenter d'autres configurations adaptées à l'architecture de la machine 10.

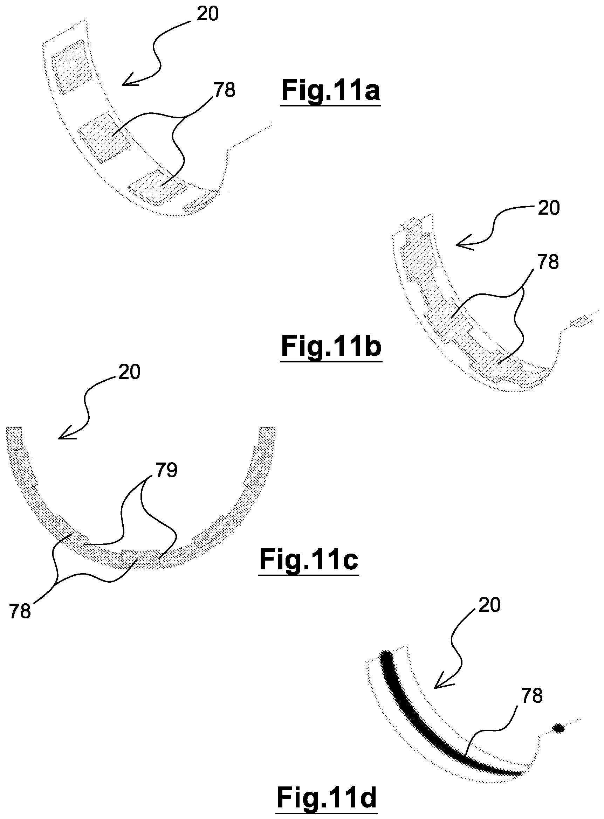

De préférence, le berceau 11 intègre une fonction anti-vibratoire pour réduire les bruits acoustiques tels que le bruit magnétique lié à l'excitation électrique du stator 16 et le bruit aérodynamique généré principalement par les ventilateurs 178 du rotor 12. Cette fonction peut être réalisée par la mise en place radiale et/ou axiale d'un ou plusieurs éléments d'amortissement 78 dans le berceau 11, comme cela est illustré sur les figures 11a à 11d.

Chaque élément d'amortissement 78 pourra prendre par exemple la forme d'une résine déposée dans le berceau 11 ou de tampons antivibratoires mis en place dans le berceau 11. Les éléments d'amortissement 78 peuvent être de nature liquide ou solide ou viscoélastique, de matières organiques, polymères, élastomères ou composites tels que silicone, caoutchouc, plastique, ou tout autre matériau adapté à l'application. La matière de l'élément d'amortissement 78 pourra si besoin inclure une fonction de conduction thermique vers le berceau 11.

La surface de contact de l'élément d'amortissement 78 avec la culasse 35 est comprise entre 2 % de la surface du stator 16 inséré dans le berceau 11 et 95% de la surface du stator 16. Les éléments 78 peuvent être mis en place suivant un angle compris entre 0 à 180° par rapport à l'axe X3 du corps 31 du stator 16.

La tenue des éléments antivibratoires 78 sur le berceau 11 peut être est réalisée par collage, ou simplement par compression avec le stator 16 lors de l'assemblage.

Dans le mode de réalisation de la figure 11a, les éléments d'amortissement 78 sont formés par des tampons d'élastomère de forme carrée espacés entre eux de manière régulière. Dans le mode de réalisation de la figure 11b, les tampons 78 sont reliés entre eux par une bande de matière. Dans le mode de réalisation de la figure 11c, les éléments d'amortissement 78 sont insérés à l'intérieur de creusures 79 de forme complémentaires réalisées dans la surface de portée 20. Dans le mode de réalisation de la figure 11d, un joint est inséré à l'intérieur d'une rainure réalisée dans la surface de portée 20 du berceau 11.

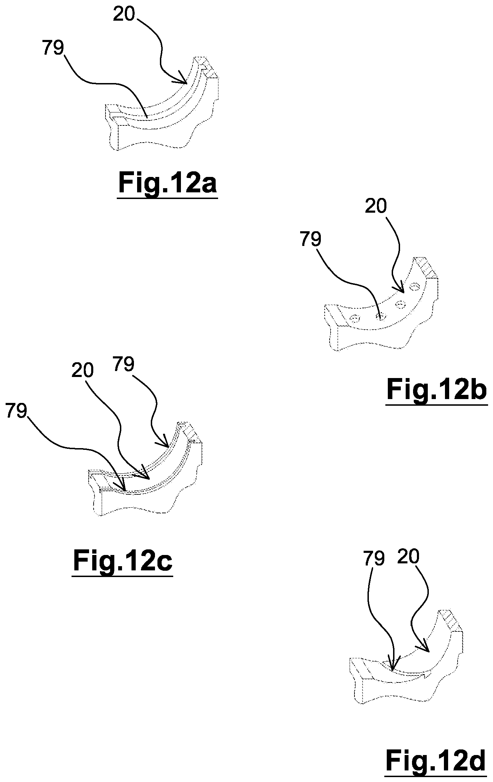

Les figures 12a à 12d montrent différentes configurations de creusures 79 pouvant être réalisées dans la surface de portée 20 afin d'intégrer des éléments d'amortissement 78 de forme correspondante. Dans le mode de réalisation de la figure 12a, la creusure 79 est allongée et située dans une zone centrale de la surface de portée 20. Dans le mode de réalisation de la figure 12b, les creusures 79 présentent des formes circulaires régulièrement espacées entre elles. Dans le mode de réalisation de la figure 12c, les creusures 79 consistent en deux rainures situées du côté des bords axiaux de la surface de portée 20. Dans le mode de réalisation de la figure 12d, les creusures 79 présentent des formes en hélicoïdes. Tout autre type de forme des creusures 79 est bien entendu envisageable.

Dans le mode de réalisation de la figure 4a dit "stator enterré", une face interne 81 du berceau 11 s'étendant en partie autour du stator 16 est surélevée par rapport à la surface de portée 20 du stator 16 qui constitue alors le fond du berceau 11. La face interne 81 est surélevée d'une épaisseur E1 donnée, de sorte que la distance L1 entre la circonférence externe des chignons 41a, 41b du stator 16 et la périphérie interne du berceau 11 soit diminuée d'une valeur proportionnelle à ladite épaisseur E1. L'invention permet ainsi d'obtenir un ensemble plus compact pour faciliter l'intégration de la machine dans l'espace sous-capot du véhicule. Dans tous les cas, la distance L1 entre la circonférence externe des chignons 41a, 41b du stator 16 et la périphérie interne du berceau 11 s'étendant autour du stator 16 est de préférence suffisant pour qu'une lame d'écoulement d'air puisse se propager autour des chignons 41a, 41b.

Dans le mode de réalisation de la figure 4b dit "stator surélevé", la surface de portée 20 du stator 16 est surélevée par rapport à un fond 82 du berceau 11 s'étendant en partie autour du stator 16. La surface de portée 20 du stator 16 est surélevée par rapport au fond 82 d'une épaisseur E2 donnée de sorte qu'une distance L2 entre la circonférence externe des chignons 41a, 41b du stator 16 et une périphérie interne du berceau 11 soit augmentée d'une valeur proportionnelle à ladite épaisseur E2. La surélévation du stator 16 pourra être obtenue par exemple par la réalisation des zones d'appui 75 en saillie. L'invention permet ainsi de garantir une distance minimale entre le berceau 11 et le bobinage 40 du stator 16 sans avoir à réaliser une opération de conformage des chignons 41a, 41b, ce qui augmente la surface d'échange et donc améliore le refroidissement de la machine.

De préférence, le ratio d'encombrement minimal K2 entre l'enveloppe radiale extérieure du chignon avant 41a et le berceau 11 est égal K2=(Dbi)/(Dch), Dch étant le diamètre extérieur du chignon avant 41a et Dbi étant le diamètre intérieur du berceau 11. Le ratio K2 est compris dans l'intervalle suivant 1.005<K2<1.15.

Le ratio d'encombrement minimal K3 entre l'enveloppe radiale extérieure du chignon arrière 41b et le berceau 11 est égal K3=(Dbi)/(Dch'), Dch' étant le diamètre extérieur du chignon arrière 41b et Dbi étant le diamètre intérieur du berceau 11. Le ratio K3 est compris dans l'intervalle suivant 1.005<K3<1.15.

Le volume garantissant une veine d'air suffisante au refroidissement du chignon avant 41a correspond à une distance L3 en millimètre comprise entre 0.2*K2 et K2.

Le volume garantissant une veine d'air suffisante au refroidissement du chignon arrière 41b correspond à une distance L4 en millimètre comprise entre 0.2*K3 et 2*K3.

En outre, le berceau 11 pourra si besoin être refroidi par un liquide de refroidissement. A cet effet, le berceau 11 pourra comporter dans sa structure interne des canaux 83 (cf. figure 9b) autorisant le passage du liquide de refroidissement prenant par exemple la forme d'eau contenant de l'anti-gel ou d'un liquide à base d'huile.

Comme on peut le voir sur les figures 1, 2, 6, 7, et 9a notamment, le berceau 11 comporte dans sa partie inférieure des oreilles 84 munie de trou autorisant le passage de moyen de fixation afin de permettre la fixation de l'alternateur sur le châssis du véhicule dans un environnement sous-capot.

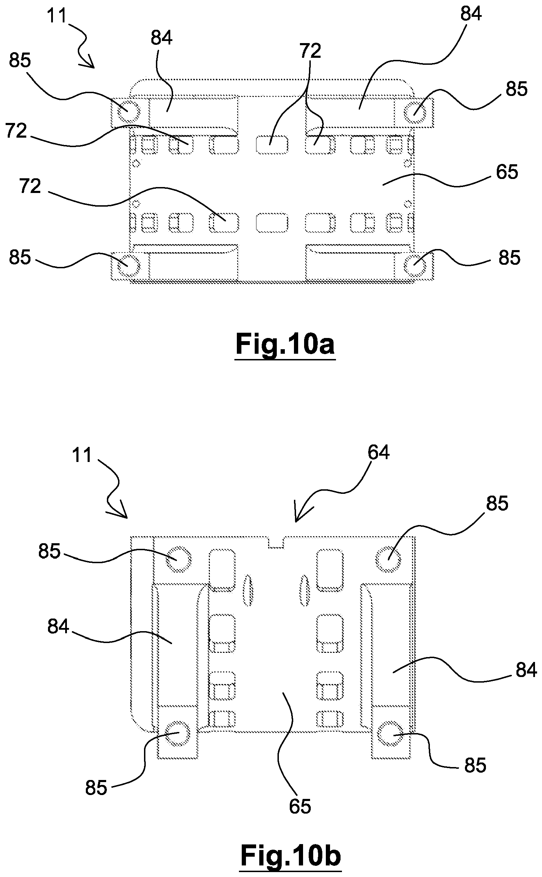

Avantageusement, le berceau 11 comporte des plots de référence 85 visibles en figures 10a et 10b positionnés au niveau des oreilles et à proximité des bords d'extrémité de la portion centrale 65 qui s'étendent perpendiculairement aux parois latérales 68. Ces plots 85 permettent de repérer le positionnement du berceau 11 lors d'une phase d'usinage.

Comme cela est illustré sur les figures 1, 2, 15, et 16 notamment, l'organe de maintien 26 du stator 16 comporte une clame 87 rapportée par rapport au berceau 11. La clame 87 a pour fonction de maintenir le stator 16 sur le berceau 11.

La clame 87 du stator 16 présente en l'occurrence une forme de portion de cylindre s'étendant suivant un angle supérieur à 170 degrés; par exemple de l'ordre de 180°. Dans certains mode de réalisation, la plage angulaire sur laquelle s'étend la portion de cylindre de la clame 87 est supérieure à 200 degrés. On optimise ainsi la forme du berceau 11, ce qui permet de réduire la masse d'aluminium nécessaire à la réalisation de la machine. Autrement dit, la clame 87 présente une forme complémentaire par rapport au berceau.

Par ailleurs, dans un exemple de réalisation, la largeur I_cl de la clame 87 est comprise entre 0,5xLc et 1,5xLc, Lc étant la largeur axiale de la culasse 35 du stator 16. En outre, la clame 87 pourra être centrée ou non par rapport à un plan de symétrie médian perpendiculaire à l'axe X3 du stator 16. La longueur L_cl de la clame 87 dépend de la largeur I_cl du berceau 11 où vient se loger le stator 16 ainsi que du diamètre des vis de fixation.

La clame 87 présente une partie pleine ayant une épaisseur E_cl comprise entre 0.2mm et 2 fois une épaisseur de la culasse 35 du stator. L'utilisation d'une clame 87 d'épaisseur fine est permise en raison du fait que le stator 16 n'a pas de contrainte mécanique.

Dans un exemple de réalisation, un ratio entre un diamètre interne D_cl de la clame par rapport au diamètre interne Dbi du berceau 11 est compris entre 0.9 et 1.1.

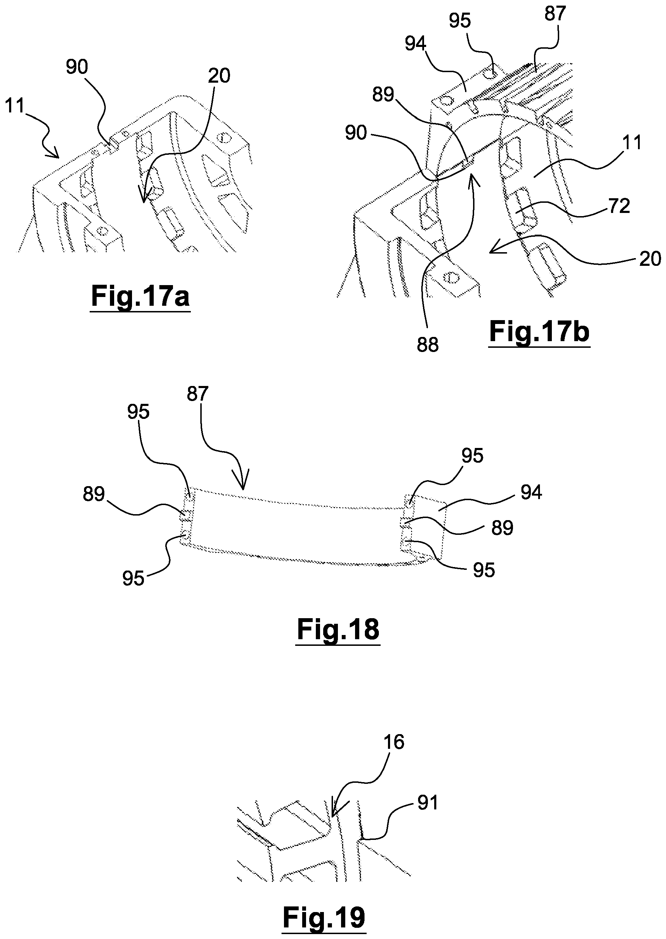

Afin d'assurer un positionnement sous contrôle de la clame 87, on utilise de préférence des moyens complémentaires d'indexage 88 de l'organe de maintien 26 par rapport au berceau 11. A cet effet, comme cela est illustré sur les figures 17a et 17b, et 18, les moyens d'indexage 88 comporte des pions 89 positionnés aux deux extrémités de la clame 87 destinés à coopérer avec des rainures 90 de forme correspondante réalisées dans les bords du berceau 11. En variante, le positionnement des pions 89 et des rainures 90 pourraient bien entendu être inversé, en sorte que les pions 89 sont ménagés dans le berceau 11 et les rainures réalisées dans les bords d'extrémité de la clame 87. Comme cela est illustré sur la figure 19, la clame 87 pourra également être munie d'une rainure 91 afin de garantir le positionnement du corps 31 du stator 16.

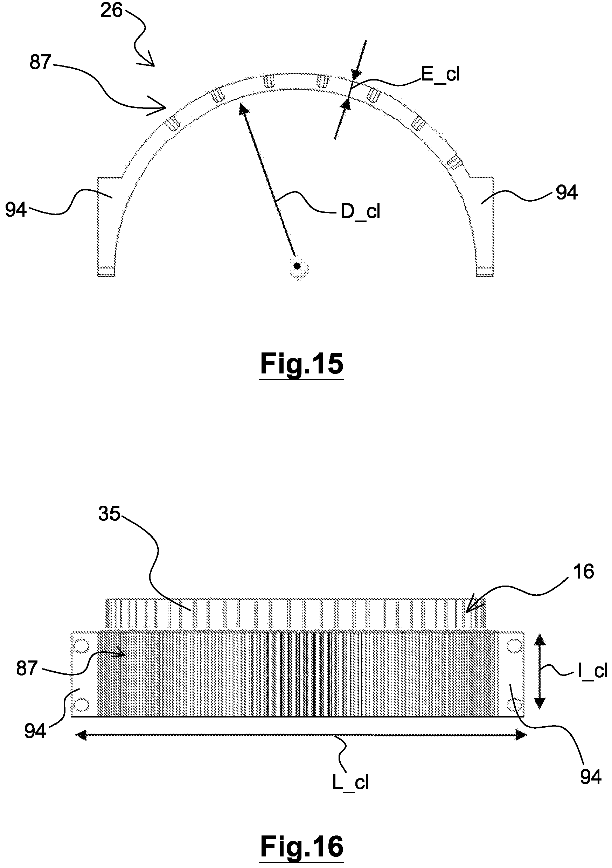

Afin de permettre la fixation de la clame 87 sur le berceau 11, la clame 87 est ici munie de deux surépaisseurs 94 à ses extrémités dans lesquelles sont réalisées des trous 95, comme cela est bien visible sur les figures 15 et 17b notamment. Ces trous 95 permettent d'autoriser le passage de moyens de fixation, tels que des vis, insérées dans des trous 96 correspondants réalisés dans le berceau 11. Avantageusement, la clame 87 est fixée sur le berceau 11 au moyen de rondelle de Belleville afin d'exercer un effort constant et d'absorber les tolérances d'usinage. En variante, la clame 87 est fixée par tout autre moyen sur le berceau 11, tel que par rivetage, soudage, ou collage.

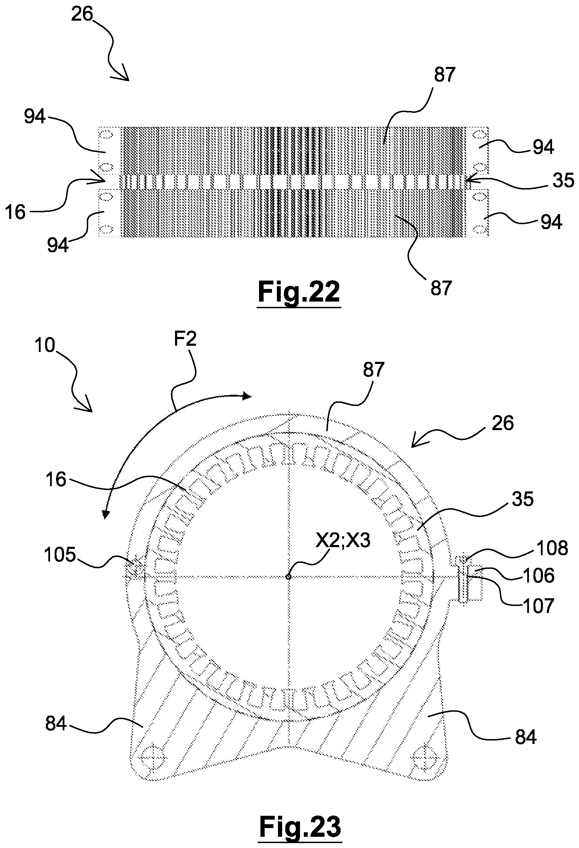

Alternativement, l'organe de maintien 26 comporte plusieurs clames 87. Dans l'exemple représenté à la figure 22, deux clames 87 de largeur identique sont montées parallèles l'une par rapport à l'autre et écartées légèrement l'une de l'autre. Toutefois, en variante, il sera possible d'utiliser plus de deux clames 87 pouvant si besoin avoir des largeurs différentes.

Dans le mode de réalisation des figures 1, 15, 16 et 23, la clame 87 est configurée pour permettre le refroidissement par conduction du stator 16. A cet effet, la périphérie interne de la clame 87 est en contact avec la périphérie externe de la culasse 35 du stator 16. La clame 87 est réalisée de préférence dans un matériau thermiquement conducteur permettant d'évacuer les calories lorsque la clame 87 est en contact avec la culasse 35 du stator 16. La clame 87 pourra ainsi être réalisée dans un matériau à base d'acier, d'aluminium, ou dans un matériau composite.

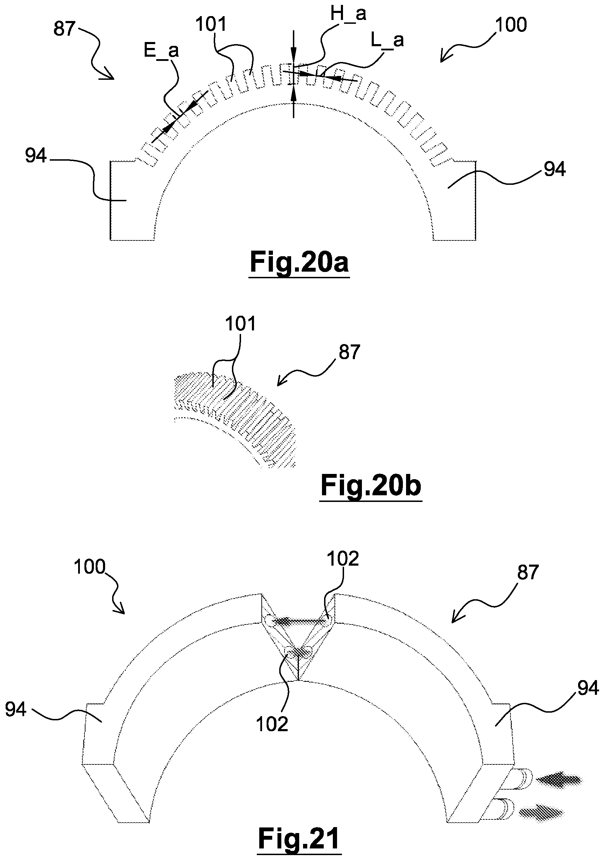

En outre, l'organe de maintien 26 comporte un dispositif de refroidissement 100 pour évacuer les calories emmagasinées. Le dispositif de refroidissement 100 comprend des moyens de refroidissement par convection muni par exemple d'ailettes 101 (cf. figures 20a et 20b) afin d'augmenter la surface d'échange avec l'air.

Dans un exemple de réalisation, les ailettes 101 pourront présenter une hauteur H_a comprise entre 0.1 et 30mm, et une largeur L_a comprise entre 0.1 et 20mm. L'espacement angulaire entre deux ailettes 101 successives pourra être compris entre 2 et 180 degrés. En outre, l'espacement E_a entre deux formes est compris entre 0.5 et 47mm. Le nombre d'ailettes 101 ménagées sur la clame 87 est compris entre 1 et 80.

Ces ailettes 101 pourront être intégrées ou rapportées par rapport à la clame 87. La fonction de dissipateur est réalisée de préférence sur toute la surface extérieure à la clame 87 hors face d'appui sur le berceau 11. Il est néanmoins envisageable de réaliser des ailettes 101 dans la surface intérieure de la clame 87 tournée vers la culasse 35 du stator 16.

Le cas échéant, une pâte thermique à base de silicone peut être ajoutée pour améliorer la conductivité thermique et par conséquent le refroidissement du stator 16 par la clame 87.

Dans le mode de réalisation de la figure 21, le dispositif de refroidissement 100 comprend un circuit de refroidissement intégré dans la clame 87. A cet effet, des conduits 102 sont ménagés dans la clame 87 pour permettre la circulation d'un liquide de refroidissement, tel que de l'eau contenant de l'anti-gel ou un liquide à base d'huile. Le circuit de refroidissement peut être obtenu soit par surmoulage de la matière de la clame sur les conduits 102, ou par ajout sur la clame 87 d'un circuit additionnel.

La clame 87 est obtenue par usinage pour les faces utilisées à la fixation sur le berceau 11. Dans le cas d'un procédé d'obtention par fonderie, la forme brute pourra posséder des plots de références qui seront utilisés à l'usinage pour le système de bridage (sur une des faces).

Dans le mode de réalisation de la figure 23, la clame 87 est montée rotative par rapport au berceau 11 via une charnière 105 permettant la rotation de la clame 87 par rapport au berceau 11 autour d'un axe parallèle à l'axe X2 du berceau 11. Le déplacement de la clame 87 peut ainsi être effectué suivant la flèche F2. La clame 87 peut ainsi passer d'une position dans laquelle la clame 87 est écartée du berceau 11 correspondant à un état déverrouillé pour permettre l'insertion du stator 16 dans le creux délimité par le berceau 11, à une position dans laquelle la clame 87 est fixée sur le berceau 11 correspondant à un état verrouillé dans lequel la clame 87 maintient serrée la culasse 35 du stator 16 entre la surface de portée 20 du stator 16 et la clame 87. A cet effet, la clame 87 comporte une protubérance 106 du côté opposé de la charnière 105. La protubérance 106 est munie d'une ouverture 107 pour le passage d'une vis 108 assurant la fixation de la clame 87 sur le berceau 11. On assure ainsi du fait du serrage un maintien radial et axial du stator 16 de la machine.

En outre, la clame 87 pourra, tout comme le berceau 11, assurer de préférence une fonction anti-vibratoire pour réduire les bruits acoustiques, tels que le bruit magnétique lié à l'excitation électrique du stator et le bruit aérodynamique généré principalement par les ventilateurs 178 du rotor 12.

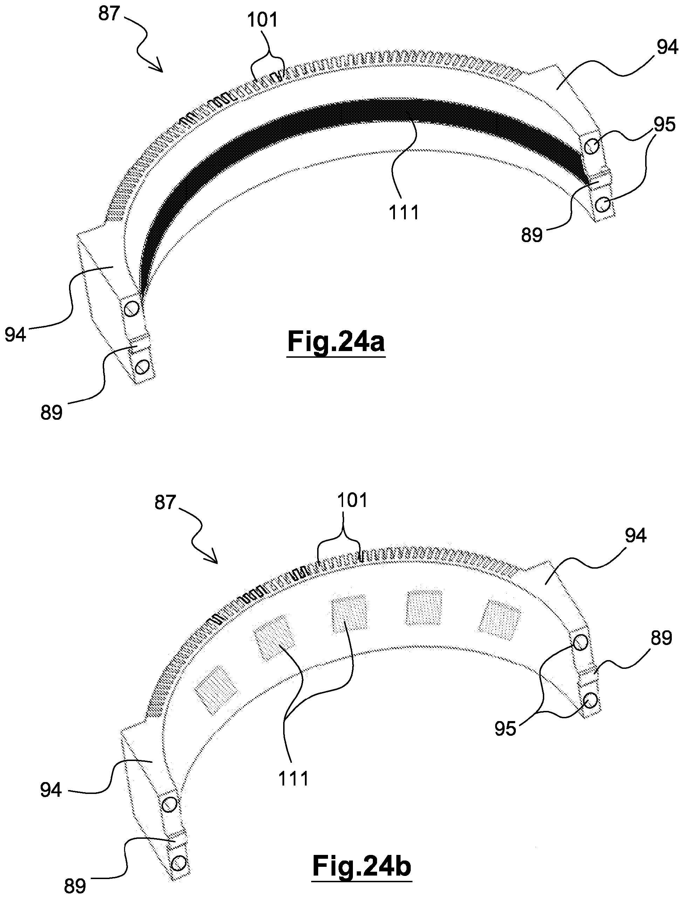

Cette fonction peut être réalisée par la mise en place radiale et/ou axiale d'au moins un élément d'amortissement 111 dans la clame 87, comme cela est illustré sur les figures 24a et 24b. Ces éléments d'amortissement 111 pourront consister une résine déposée dans la clame 87 ou en des tampons positionnés dans la clame 87.

Les éléments d'amortissement 111 peuvent être de nature liquide ou solide ou viscoélastique, de matières organiques, polymères, élastomères ou composites tels que silicone, caoutchouc, plastique. La matière de l'élément antivibratoire 111 pourra assurer une fonction de conduction thermique vers le berceau 11.

La surface de contact du ou des éléments d'amortissement 111 pourra être comprise entre 2% et 95% de la surface du corps 31 du stator 16 inséré dans la clame 87.

Les éléments 111 peuvent être mis en place suivant un angle compris entre 0 et 180 degrés par rapport à l'axe X3 du stator 16. La tenue des éléments antivibratoires 111 sur la clame 87 peut être est réalisée par collage, ou simplement par compression du stator 16 lors de l'assemblage.

La figure 24a illustre ainsi la mise en place d'un joint en caoutchouc suivant la longueur de la clame 87. La figure 24b illustre la mise en place d'une série de tampon 111. Des éléments d'amortissement 111 ayant une configuration analogue aux éléments d'amortissement 78 du berceau 11 pourront aussi être intégrés dans la clame 87.

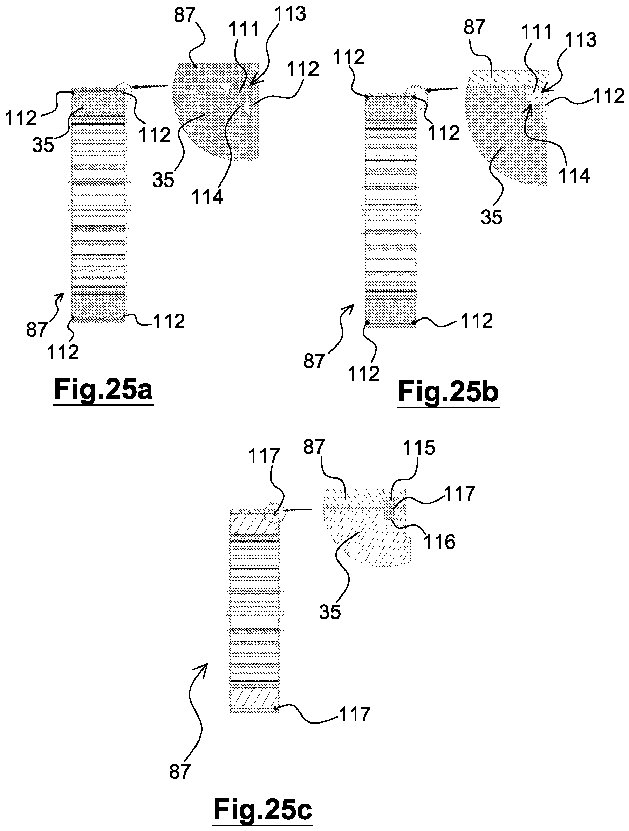

Dans les variantes de réalisation des figures 25a et 25b, le stator 16 est maintenu axialement par des rebords 112 de la clame 87 s'étendant le long des bords d'extrémité axiaux de la clame 87. Un élément d'amortissement 111 de type joint torique est en outre disposé dans un coin 113 de le clame 87 défini par l'intersection entre un rebord 112 et la périphérie interne de la clame 87, en sorte que le joint 111 est écrasé entre la clame 87 et le stator 16. Dans la réalisation de la figure 25a, le bord 114 de la culasse 35 correspondant du stator 16 est biseauté. Dans le mode de réalisation de la figure 25b, le bord 114 de la culasse 35 présente des épaulements contre lesquels est en appui le joint 111. Les rebords 112 permettent ainsi d'améliorer ainsi le maintien axial du stator 16 sur le berceau 11.

Dans le mode de réalisation de la figure 25c, la clame 87 et la culasse 35 du stator 16 comportent chacun respectivement une rainure 115, 116. Ces rainures 115, 116 sont positionnées en vis-à-vis l'une de l'autre. Un jonc d'arrêt 117 est inséré à l'intérieur de ces rainures 117. Ce jonc d'arrêt 117 en appui contre les faces d'orientation radiale délimitant ces rainures 115, 116 permet ainsi d'assurer un maintien axial du corps 31 du stator 16 sur le berceau 11.

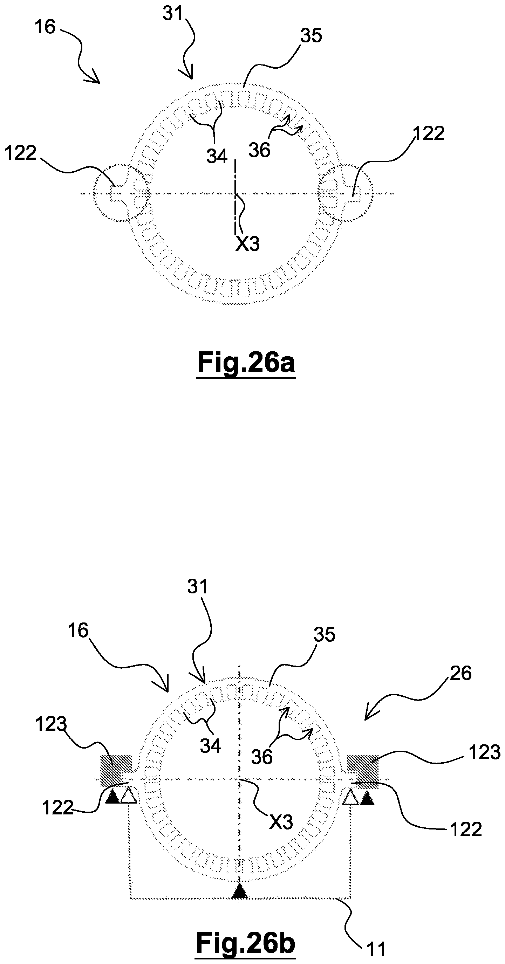

En variante, comme cela est illustré dans les modes de réalisation des figures 26 à 30, l'architecture de la machine 10 est dépourvue de clame 87. L'organe de maintien 26 comporte alors des excroissances 122 issues de la culasse 35 du stator 16 pour permettre le maintien du stator 16 sur le berceau 11.

Plus précisément, dans le mode réalisation de la figure 26b, le corps 31 du stator 16 comporte deux excroissances 122 sensiblement diamétralement opposée et s'étendant en saillie depuis la périphérie externe de la culasse 35. Les deux excroissances 122 sont sensiblement symétriques l'une par rapport à l'autre. Une fois que le stator 16 est déposé dans le berceau 11, deux dispositifs de blocage 123 assurent un maintien des excroissances 122 contre le berceau 11. Les dispositifs de blocage 123 peuvent être vissés, rivetés, ou soudés sur le berceau 11. En variante, d'autres systèmes d'assemblage des dispositifs 123 sur le berceau 11 pourront être utilisés, cela dépend de l'application. Les dispositifs de blocage 123 peuvent être réalisés par exemple dans un matériau de type aluminium, acier, ou matériaux composites. Ces formes 122 pourront également être utilisées pour l'indexage stator 16 dans les procédés de bobinage, et dans les procédés d'assemblage du stator 16 dans le berceau 11.

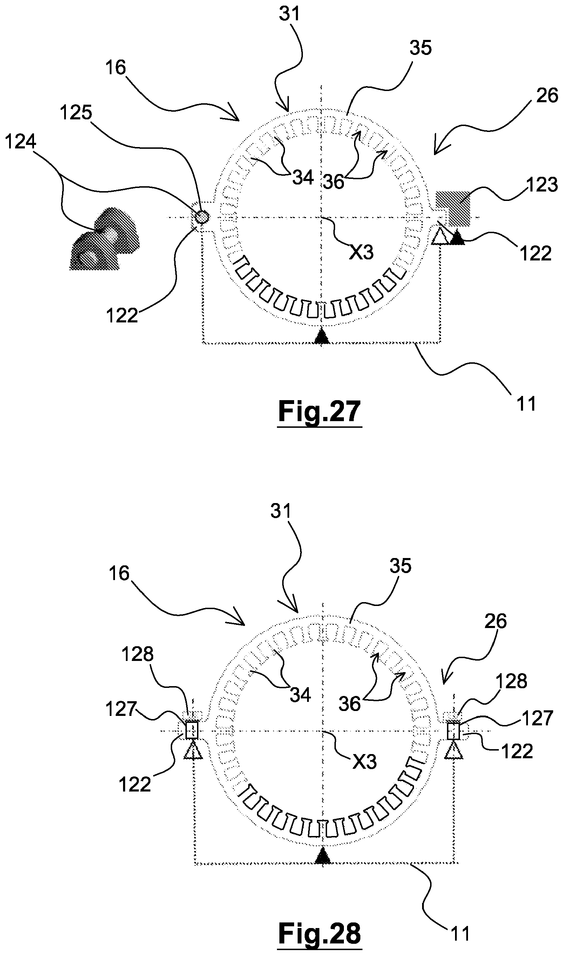

Dans le mode de réalisation de la figure 27, une des excroissances 122 est percée par un trou 125 perpendiculairement à la surface des tôles du corps 31 du stator 16 pour accueillir une tige 124 solidaire du berceau 11 pénétrant dans le trou 125, de telle façon que le corps 31 du stator 16 peut pivoter autour d'un axe de la tige 124 parallèle à l'axe X3. La deuxième excroissance 122 est destinée à coopérer avec un dispositif de blocage 123 pour brider le stator 16 sur le berceau 11. Comme précédemment, le dispositif de blocage 123 pourra être vissé, riveté, ou soudé sur le berceau 11.

Dans le mode de réalisation de la figure 28, les deux excroissances 122 comportent chacune un perçage 127 parallèle à la surface des tôles du corps 31 pour permettre le passage d'un élément de fixation 128, de type vis ou rivet par exemple. Les éléments de fixation 128 pourront ainsi assurer une fixation directe du stator 16 sur le berceau 11.

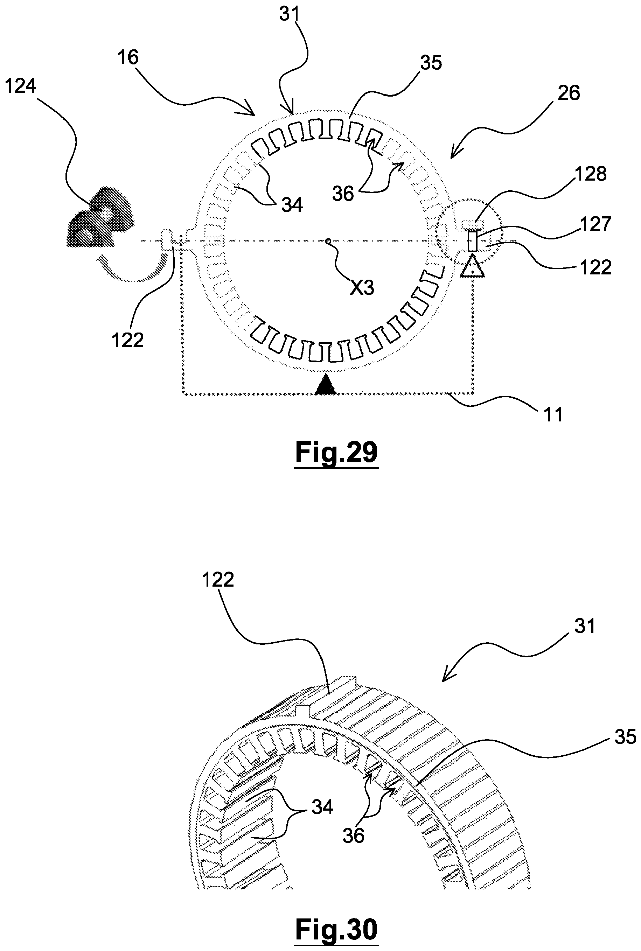

Dans le mode de réalisation de la figure 29, une excroissance 122 en forme de U est destinée à coopérer avec la tige 124 solidaire du berceau 11, de telle façon que le corps 31 du stator 16 peut pivoter autour d'un axe de la tige 124 parallèle à l'axe X3 lors de la mise en place du stator 16 dans le berceau 11. La deuxième excroissance 122 est destinée à assurer une fixation du stator 16 sur le berceau 11, soit par l'utilisation d'un dispositif de blocage 123 associé, soit, comme représenté, par l'utilisation d'un élément de fixation 128 traversant un perçage 127 réalisé dans l'excroissance 122 suivant une direction sensiblement parallèle aux feuilles de tôles du corps 31.

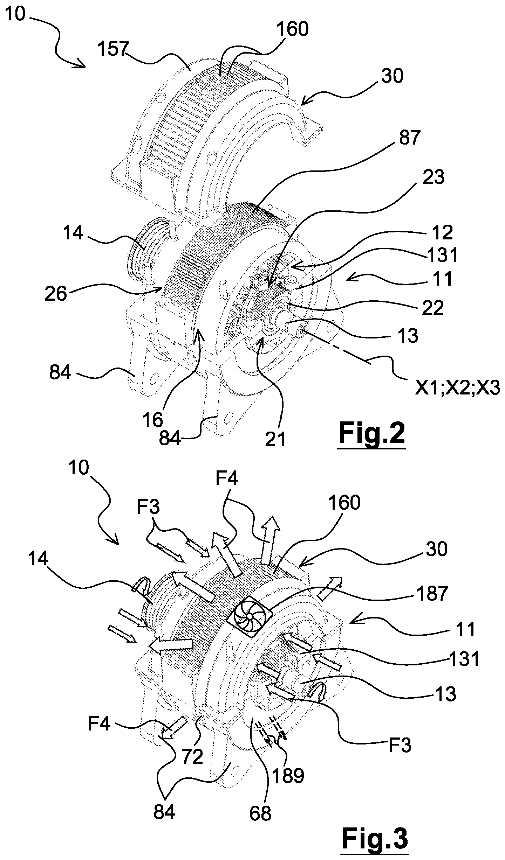

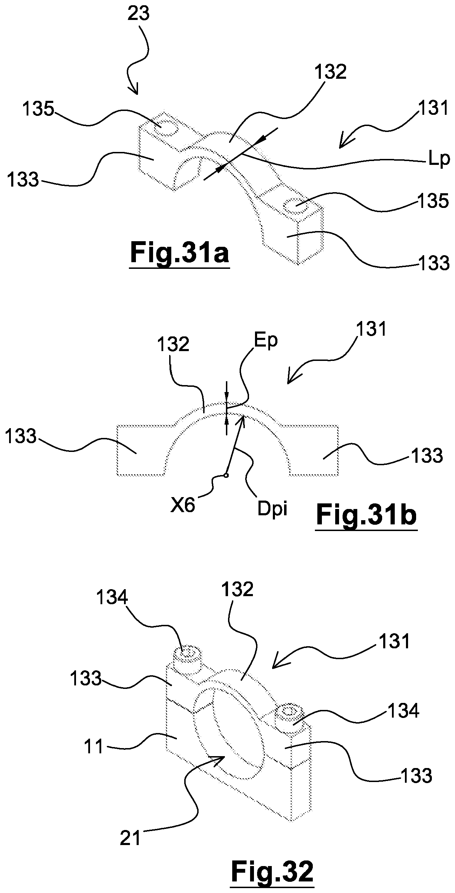

Comme cela est bien visible sur la figure 31a, 31b et 32, chaque dispositif de maintien 23 de roulement rapporté par rapport au berceau 11 est constitué par une clame 131 destiné chacune à coopérer avec une des portées de guidage 21 correspondantes. Ces clames 131 délimitent des portions de cylindre complémentaires aux portions de cylindre délimitée par les portées de guidage 21 de manière à enserrer chaque roulement 22 (cf. figure 2). Chaque clame 131 est ainsi configurée pour maintenir serrée la cage externe du roulement 22 entre la portée de guidage 21 et la clame 131.

A cet effet, chaque clame 131 comporte un pont 132 s'étendant entre deux extrémités 133 qui sont fixées sur le berceau 11 de part et d'autre de la portée de guidage 21. Les moyens de fixation 134 de la clame 131 sur le berceau 11 pourront par exemple être constitués par des vis ou des rivets destinés à traverser des ouvertures 135 réalisées dans des surépaisseurs des extrémités 133 pour coopérer avec des trous correspondants réalisés dans le berceau 136.

Le pont 132 est délimité à sa périphérie interne et sa périphérie externe par des cercles concentriques. Un ratio entre une épaisseur Ep du pont 132 par rapport à un diamètre interne Dpi du pont (cf. figure 31b) est compris entre 0.05 et 0.3. Avantageusement, une épaisseur Ep du pont 132 est comprise entre 0.2 et 3 fois l'épaisseur de la bague intérieure du roulement 32. Ainsi, la clame 131 est dimensionnée pour supporter les efforts de l'application car l'épaisseur de la bague intérieure est directement liée à ces efforts.

Il est à noter que l'axe X6 des clames 131, correspondant à l'axe de la périphérie interne 132 du pont 132, est confondu avec l'axe du roulement 22 correspondant.

De préférence, la largeur axiale Lp de la clame 131 (cf. figure 31a) est sensiblement égale à la largeur axiale de la cage extérieure du roulement 22.

Par ailleurs, afin que les clames 131 n'interfèrent pas avec le flux d'air généré par les ventilateurs 178 montés chacun sur une face d'extrémité du rotor 12, chaque clame 131 présente une hauteur inférieure à la circonférence suivant laquelle sont situées les extrémités internes des pales des ventilateurs 178.

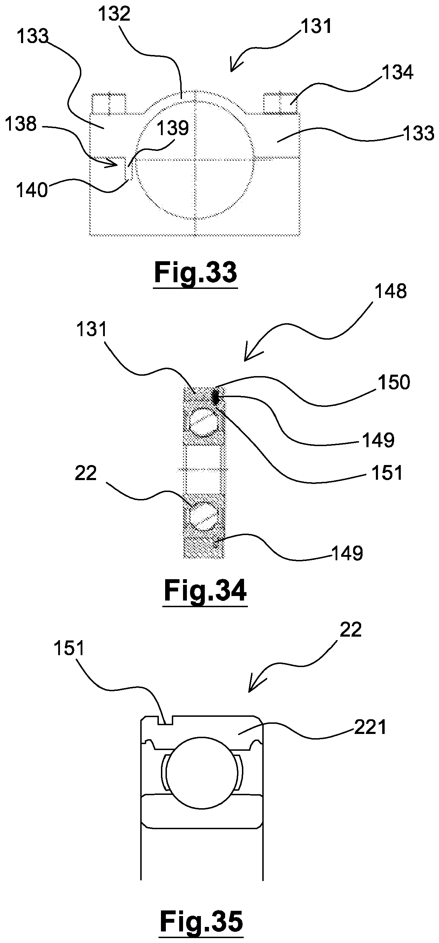

Pour faciliter le montage, on prévoit de préférence un moyen d'indexage 138 du dispositif de maintien 23 par rapport au berceau 11. Comme on peut le voir sur la figure 33, ce moyen d'indexage 138 est constitué par une languette 139 destinée à coopérer avec une rainure 140 correspondante ménagée dans le berceau 11.

Les clames 131 pourront être en acier, aluminium, ou matériaux composites. La clame 131 est obtenue par usinage pour les faces utilisées pour la fixation sur le berceau 11. Dans le cas d'un procédé d'obtention par fonderie, la forme brute pourra posséder des plots de références ménagés dans les extrémités 133 qui seront utilisés lors de l'usinage pour le système de bridage.

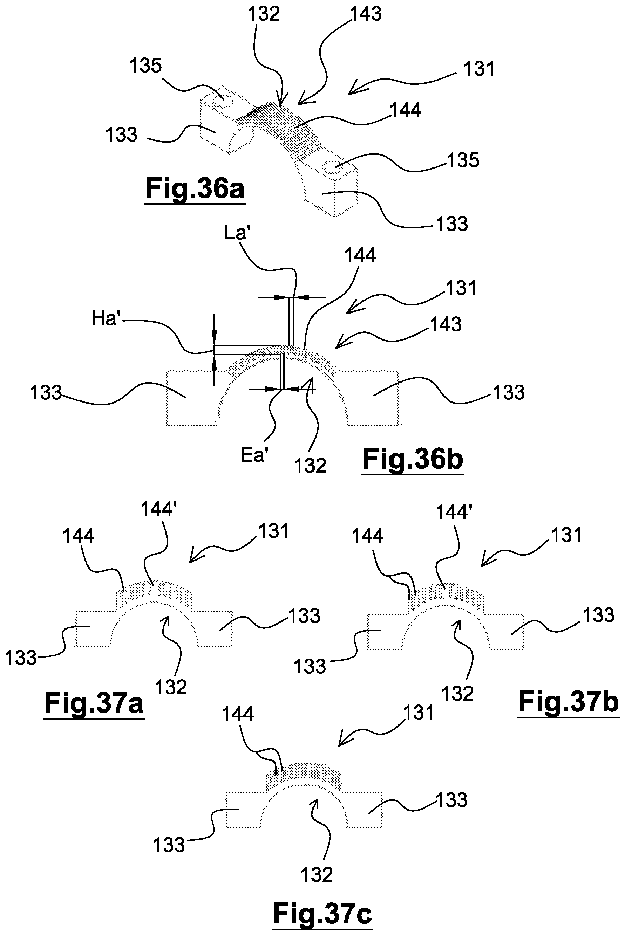

Le dispositif de maintien 23 de roulement comporte en outre de préférence un dissipateur thermique 143 comme cela est illustré sur les figures 36a, 36b, 37a, 37b, et 37c. Un tel dissipateur 143 permet d'améliorer la durée de vie des roulements 22 et permet également d'avoir des roulements 22 avec jeu réduits, ce qui a une influence vibratoire sur le bruit de fonctionnement qui est minimisé.

Ce dissipateur thermique 143 pourra être positionné sur toute la surface extérieure à la clame 131 hors face d'appui sur le berceau 131. En l'occurrence, le dissipateur thermique 143 est positionné sur la périphérie externe du pont 132.

Ce dissipateur thermique comporte une pluralité d'ailettes 144. Dans un exemple de réalisation (cf. figure 36b), les ailettes 144 pourront présenter une hauteur H_a' comprise entre 0.1 et 30mm, et une largeur L_a' comprise entre 0.1 et 20mm. L'espacement angulaire entre deux ailettes 144 successives pourra être compris entre 2 et 180 degrés. En outre, l'espacement E_a' entre deux formes est compris entre 0.5 et 47mm. Le nombre d'ailettes 101 ménagées sur la clame 131 est compris entre 1 et 90. Les figures 37a à 37c illustrent différents types de configurations d'ailettes 144. Les clames 131 pourront présenter une ailette centrale pleine 144' plus épaisses que les ailettes latérales 144, comme cela est illustré sur les figures 37a et 37b.

Le dissipateur thermique 143 comportant les ailettes 144, 144' pourra être rapporté par rapport à la clame 131 ou venir de de matière avec la clame 131. Une pâte thermique, par exemple à base de silicone, peut être ajoutée pour améliorer la conductivité thermique des clames 131 et par conséquent le refroidissement des roulements 22.

De préférence, un système de butée 148 de roulement permet de maintenir axialement chaque roulement 22 par rapport au berceau 11. Ce système de butée 148 est intégré sur le dispositif de maintien 23 de roulement et/ou sur les portées de guidage 21 du berceau 11. Ainsi, dans le mode de réalisation des figures 34 et 35, le système de butée 148 comporte un jonc d'arrêt 149 coopérant d'une part avec une rainure 150 ménagée dans la clame 131 correspondante et d'autre part avec une rainure 151 en vis-à-vis réalisée dans le roulement 22 correspondant. La rainure 151 est plus précisément réalisée dans la bague externe 221 du roulement 22, comme cela est montré sur la vue détaillée de la figure 35. Le système de butée 148 assure ainsi un maintien axial du roulement 22 compte tenu de la mise en appui du jonc 149 contre les faces d'orientation radiale délimitant les rainures 150, 151.

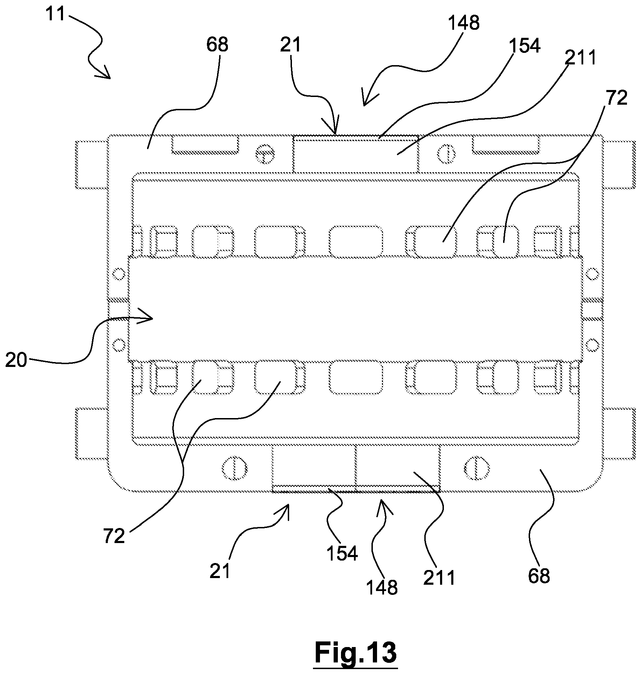

Alternativement, comme cela est illustré sur la figure 13, le système de butée 148 pourra appartenir au berceau 11. Dans ce cas, le système de butée 148 comprend des épaulements 154 annulaires ménagés dans au moins une extrémité axiale des portées de guidage 21 et contre lesquels vient en appui un roulement 22 correspondant. Ainsi, les épaulements 154 pourront être réalisés d'un seul côté axial ou des deux côtés axiaux de chaque portée de guidage 21.

Comme cela est visible sur la figure 38, le capot 30 comporte une portion centrale 157 ayant une forme de portion de cylindre et deux parois latérales 158 situées aux deux extrémités axiales de la portion centrale 157. Les parois latérales 158 en forme de portions de disque présentent des échancrures 159 pour autoriser un passage axial de l'air à l'intérieur de la machine 10. Des ouvertures traversantes 160 mieux visibles en figure 2, sont réalisées dans la portion centrale 157 pour autoriser un refoulement radial du flux d'air généré par les ventilateurs 178, comme cela est décrit ci-après.

Des pieds 161 délimitant les coins d'un rectangle sont destinés à venir en appui contre les bords correspondants du berceau 11. Le capot 30 a essentiellement une fonction de protection de la machine de son environnement extérieur.

Ce capot 30 est assemblé de façon radiale sur le berceau 11 et/ou la clame 87 du stator 16 et non de façon axiale comme cela est le cas avec les paliers avant et arrière des machines existantes. Le capot 30 pourra être fixé sur le berceau 11 et/ou la clame 87 par rivetage, thermo-collage, vissage, ou clipsage, soudage, collage sertissage, cerclage, frettage, brasage, ou estampage.

Plus précisément, dans le cas d'un capot 30 réalisé dans un matériau plastique, la fixation de celui-ci peut être réalisée à l'aide d'insert métallique sur lequel est surmoulé la masse plastique formant le capot 30 puis vissé sur le berceau 11, par thermoformage du capot 30 sur le berceau 11 et/ou la clame 87 du stator 16 ou par thermocollage du capot 30 sur le berceau 11 et/ou la clame 87, ou par rivetage du capot 30 plastique sur le berceau 11 et/ou la clame 87.

Alternativement, le capot 30 pourra être réalisé dans un matériau métallique, tel que de l'aluminium ou de l'acier.

Le capot 30 pourra être muni d'un dispositif d'isolation phonique 162 réalisé par exemple dans un matériau à base de mousse, ou d'un matériau de forme alvéolé.

Comme cela est illustré sur la figure 41, un porte-balais 61 solidaire du capot 30, en l'occurrence d'une paroi latérale 158, comporte des balais 60 destinés à venir frotter sur des bagues 63 portées par l'arbre 13 et réalisées par exemple dans un matériau à base de cuivre. Dans une variante de réalisation avantageuse représentée en pointillés, le capot 30 comporte à chacune de ses extrémités un porte-balais 61 comprenant chacun un balai 60 coopérant avec une bague 63 située à chaque extrémité axiale du rotor 12. Le positionnement de la poulie 14 est alors adapté en conséquence. De préférence, chaque porte-balais 61 est muni d'un protecteur intégré dans le capot 30. Le protecteur permet d'assurer une rétention de la poussière des balais 60.

Chaque porte-balais 61 comporte de préférence au moins un canal guidant un passage d'un flux d'air en direction des balais 60 et des bagues 63. Cela permet ainsi d'augmenter la durée de vie des balais 60. Le régulateur 62 de tension du rotor 12 générant la tension appliquée par les balais 60 est avantageusement monté sur le capot 30. On pourra tirer profit du capot 30 réalisé dans un matériau plastique pour surmouler le régulateur 62 sur le capot 30.

Le capot 30 pourra comme le berceau 11 comporter des canaux refroidissement 301 dans lesquels circule un liquide de refroidissement de manière à évacuer la chaleur produite par les bagues 63 et le module électronique de commande 46.

De préférence, comme cela est illustré sur la figure 39, le module électronique de redressement 46 est déporté radialement par rapport à une culasse 35 du stator 16.

Le module électronique de redressement 46 s'étend au moins partiellement dans un plan P1 parallèle à un axe X3 de la culasse 35 et situé à une distance radiale du stator 16 supérieure à celle de la périphérie externe de la culasse 35. Le module électronique de redressement 46 pourra s'étendre au moins en partie dans une surface d'un cylindre de révolution centré sur l'axe du stator 16 parallèle à la culasse 35 et situé à une distance radiale de l'axe du stator 16 supérieure à celle de la périphérie externe de la culasse 35.

Le module électronique de redressement 46 est de préférence monté sur la clame 87 du stator 16. Les éléments redresseurs 47 de type diodes ou transistors sont avantageusement positionnés axialement de part et d'autre de la clame 87 afin de coopérer avec les sorties de phase 171 dont le positionnement est décrit plus en détails ci-après. Les éléments redresseurs 47a positifs pourront ainsi être positionnés d'un même côté de la clame 87; tandis que les éléments redresseurs négatifs 47b pourront être positionnés du côté opposé. En variante, le module électronique de redressement 46 pourra être fixé ou surmoulé dans le capot 30. Le capot 30 pourra alors comporter des traces 174 (cf. figure 38) surmoulées destinées à être reliées électriquement au module électronique de redressement 46. Des éléments de dissipation thermique pourront également être surmoulés sur le capot 30 afin de garantir un bon fonctionnement des éléments redresseur 47 de type diode ou transistor MOSFET.

Avantageusement, comme cela est illustré par la figure 40a, les sorties de phase 171 du bobinage 40 sont courbées par rapport à l'axe X3 du stator 16 d'un angle A_ph compris entre 45° et 120°. Les sorties de phase 171 sont courbées par rapport à l'axe X3 du stator 16 d'un angle A_ph valant de préférence de l'ordre de 90 degrés. On évite ainsi de faire passer les sorties de phase 171 suivant la circonférence afin de les mettre en regard d'un interconnecteur, ce qui facilite grandement le montage de l'alternateur 10.

En outre, comme cela est illustré par la figure 40b, les sorties de phase 171 pourront être positionnées indifféremment du côté avant ou du côté arrière de l'alternateur 10. De préférence, les sorties de phase 171 sont réparties axialement de part et d'autre du stator 16. Les sorties de phase 171 sont ainsi réparties aux deux extrémités axiales du stator 16. On obtient ainsi de la flexibilité pour les sorties de phases, c'est-à-dire qu'il est possible de répartir les sorties des deux côtés axiaux du stator. Dans le cas particulier d'un bobinage ondulé réparti, on minimise ainsi les contraintes, car il n'est plus nécessaire de tourner autour de deux encoches pour sortir les phases d'un même côté. En outre, les sorties de phase 171 pourront ainsi être reliées à la série d'éléments redresseurs 47a, 47b correspondants.

Lorsque le module électronique de redressement 46 est monté sur la clame 87 du stator 16, la clame 87 est apte à refroidir par conduction le module électronique de redressement 46. En outre, le dispositif de refroidissement 100 est prévu pour évacuer la chaleur produite par l'alternateur 10 et le module électronique 46. Le dispositif de refroidissement 100 comprend des moyens 177 générateur d'un flux d'air axial forcé aptes à générer un flux d'air s'évacuant radialement après avoir refroidi par convection le module électronique de redressement 46.

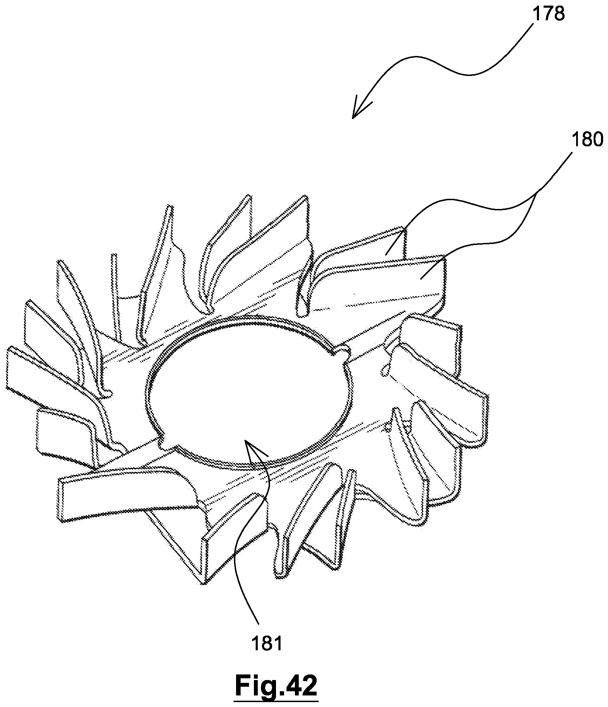

A cet effet, les moyens 177 comportent deux ventilateurs 178 montés chacun sur une face d'extrémité axiale du rotor 12. Chaque ventilateur 178 bien visible sur la figure 42 est pourvu d'une pluralité de pales 180. Une ouverture centrale 181 permet le passage de l'arbre 13. Chaque ventilateur 178 réalisé de préférence en plastique est fixé par exemple par collage ou rivetage sur les faces d'extrémité du rotor 12.

Comme cela est illustré sur la figure 3, les ventilateurs 178 sont aptes à générer un flux d'air pénétrant axialement, suivant les flèches F3, à l'intérieur de la machine via les parois latérales ouvertes du capot 30 et du berceau 11, et s'évacuant radialement après avoir refroidi par convection le module électronique de redressement 46 vers l'extérieur suivant les flèches F3, via les ouvertures 72, 160 réalisées respectivement dans le berceau 11 et le capot 30.

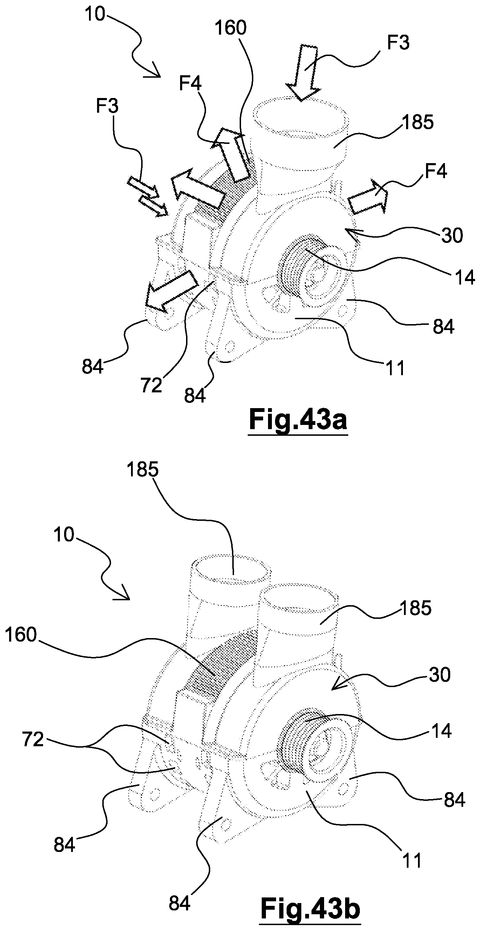

Dans le mode de réalisation de la figure 43a, le capot 30 comporte un conduit d'entrée d'air 185, en sorte que l'air peut entrer radialement dans la machine 10 par ce conduit 185 et axialement du côté opposé suivant les flèches F3, pour être refoulé radialement, via les ouvertures 72 et 160, suivant les flèches F4. La face latérale du capot 30 située du côté du conduit 185 pourra dans ce cas être fermée.

Dans le mode de réalisation de la figure 43b, le capot 30 comporte deux conduits d'entrée d'air radiaux.

En variante, le rotor 12 comporte un seul ventilateur 178 fixé sur une de ses extrémités axiales.

En outre, un radiateur annulaire (cf. figure 3) rapporté pour refroidir l'air pénétrant dans la machine 10 pourra être positionné de chaque côté du berceau 11. Le radiateur pourra être en relation avec l'habitacle du véhicule pour fournir de la chaleur si besoin. Les conduits de circulation du fluide caloporteur correspondants sont référencés 189 sur la figure 3.

Si besoin, au moins un ventilateur électrique 187 pourra être déporté radialement, afin de refroidir le module électronique de redressement 46. Le ventilateur électrique 187 est fixé par exemple sur le capot 30 de manière à orienter son flux d'air en direction du module électronique 46. Le ventilateur électrique 187 pourra par exemple être un ventilateur alimenté en basse tension de l'ordre de 12V à 48V.

Bien que l'invention a été décrite en référence avec un alternateur, il est clair que l'invention peut être mise en oeuvre avec tout autre type de machine électrique, telle qu'un moteur électrique.

Afin de réaliser la machine électrique tournante 10, on réalise une étape d'usinage dans le berceau 11 de la surface de portée 20 du stator 16, ainsi qu'une étape d'usinage dans le berceau 11 des portées de guidage 21 positionnées axialement respectivement de part et d'autre de la surface de portée 20 du stator 16. Les étapes d'usinage du berceau 11 sont réalisées au cours d'une même opération d'usinage. Ainsi, les étapes d'usinage du berceau 11 sont réalisées en même temps ou à tout le moins sans débridage de la pièce au cours de l'usinage. Le berceau 11 présente donc des traces correspondantes d'usinage.

L'ensemble stator 16, arbre 13 et rotor 12 est ensuite monté respectivement en appui sur la surface de portée 20 et les portées de guidage 21 suivant la direction de montage M1 perpendiculaire à l'axe X2 du berceau 11.

L'invention permet ainsi de regrouper toutes les portées, c'est-à-dire les portées de guidage 21, et la portée de stator 20 sur une même pièce 11 qui est usinée pour réaliser toutes ces portées avantageusement en une seule fois, en tout cas sur la même machine d'usinage sans débrider la pièce. D'un point de vue dimensionnel, l'invention permet ainsi de supprimer les jeux suivants: le jeu de montage du palier arrière, et le jeu de montage du palier avant des machines de l'état de l'art. On réduit également, les jeux des deux portées de guidage 21, et des deux portées du stator 16 car elles sont obtenues par usinage. On supprime également la somme entre le jeu sur la portée de guidage 21 et le jeu sur la portée du stator 16, car les portées sont usinées sur la même pièce avec le même référentiel.

Dans la mesure où les jeux suivants sont corrélés, à savoir le jeu de la portée 21 recevant le roulement 22, le jeu sur la portée du palier avant recevant le stator 16, et le jeu de la portée 21 recevant le roulement 22, on obtient ainsi un entrefer 17 qui doit être supérieur aux valeurs ci-dessous:
- une première valeur obtenue par la somme des jeux suivants: le jeu de la portée 21 recevant le roulement 22, le jeu du roulement 22 avant, le jeu sur le diamètre externe du stator 16, le jeu sur le diamètre interne du stator 16, le jeu sur le diamètre externe du rotor 12,
- une deuxième valeur obtenue par la somme des jeux suivants: le jeu sur la portée du palier avant recevant le stator 16, le jeu sur le diamètre externe du stator 16, le jeu sur le diamètre interne du stator 16, le jeu sur le diamètre externe du rotor 12, et
- une troisième valeur obtenue par la somme des jeux suivants: le jeu de la portée 21 recevant le roulement 22, le jeu du roulement 22 arrière, le jeu sur le diamètre externe du stator 16, le jeu sur le diamètre interne du stator 16, et le jeu sur le diamètre externe du rotor 12.

Du point de vue géométrique, l'invention permet de réduire la contrainte d'alignement sur trois diamètres au lieu de quatre. On obtient donc une réduction voire une suppression des problèmes de coaxialité des portées (des portées de guidage 21, et de la portée 20 du stator 16) entre elles. En conséquence, dans l'invention, l'entrefer 17 doit absorber uniquement les jeux ci-dessus, ce qui réduit fortement les problèmes de coaxialité. L'entrefer 17 peut donc être sensiblement réduit sans risque de destruction de la machine électrique 10.

## Revendications

1. Machine électrique tournante, comprenant un stator (16) muni d'une culasse (35) et un rotor (12) monté sur un arbre (13), ladite machine électrique tournante comprenant en outre un berceau (11) comportant une surface de portée (20) du stator (16), un organe de maintien (26) du stator (16) comportant une clame (87), un capot (30) de forme complémentaire au berceau, le capot fermant ledit berceau et un module électronique de redressement (46) déporté radialement par rapport à ladite culasse (35), ledit module électronique de redressement (46) s'étendant dans une surface d'un cylindre de révolution centré sur un axe (X3) du stator (16) parallèle à la culasse (35) et situé à une distance radiale de l'axe (X3) du stator (16) supérieure à celle de ladite culasse (35) et étant monté sur l'organe de maintien (26) du stator (16) ou sur le capot (30).

2. Machine électrique tournante selon la revendication 1, **caractérisée en ce que** des sorties de phase (171) d'un bobinage (40) sont réparties à deux extrémités axiales du stator (16).

3. Machine électrique tournante selon la revendication 1 ou 2, **caractérisée en ce que** des sorties de phase (171) d'un bobinage (40) sont courbées par rapport à l'axe (X3) du stator (16) d'un angle compris entre 45 et 120 degrés.

4. Machine électrique tournante selon la revendication 3, **caractérisée en ce que** les sorties de phase sont courbées par rapport à l'axe (X3) du stator (16) d'un angle de 90 degrés.

5. Machine électrique tournante selon la revendication 1, **caractérisée en ce que** l'organe de maintien (26) étant apte à refroidir par conduction le module électronique de redressement (46).

6. Machine électrique tournante selon la revendication 5, **caractérisée en ce que** l'organe de maintien (26) comprend un dispositif de refroidissement (100) pour évacuer des calories de l'organe de maintien (26).

7. Machine électrique tournante selon la revendication 6, **caractérisée en ce que** le dispositif de refroidissement (100) comprend des conduits (102) ménagés dans l'organe de maintien (26) pour permettre une circulation d'un liquide de refroidissement.

8. Machine selon la revendication 6 ou 7, **caractérisée en ce que** le dispositif de refroidissement (100) comprend des moyens de refroidissement par convection comportant des ailettes (101).

9. Machine électrique tournante selon la revendication 1, **caractérisée en ce que** le capot (30) comporte des canaux de refroidissement dans lequel circule un liquide de refroidissement.

10. Machine électrique tournante selon la revendication 1 ou 9, **caractérisée en ce que** le capot (30) comporte des traces (174) surmoulées destinées à être reliées électriquement audit module électronique de redressement (46).

11. Machine électrique tournante selon l'une quelconque des revendications 1 à 10, **caractérisée en ce que** la machine électrique tournante comprend des moyens (177) générateurs d'un flux d'air axial forcé aptes à générer un flux d'air (F3, F4) s'évacuant radialement après avoir refroidi par convection le module électronique de redressement (46).

12. Machine électrique tournante selon la revendication 11, **caractérisée en ce que** les moyens (177) générateurs d'un flux d'air axial forcé comportent au moins un ventilateur (178) monté sur ledit rotor (12) apte à aspirer axialement de l'air frais pour le refouler vers ledit module électronique de redressement (46).

## Patentansprüche

1. Rotierende elektrische Maschine, die einen mit einem Joch (35) versehenen Stator (16) und einen auf eine Welle (13) montierten Rotor (12) enthält, wobei die rotierende elektrische Maschine außerdem einen Tragrahmen (11), der eine Auflagefläche (20) des Stators (16) aufweist, ein Halteorgan (26) des Stators (16), das eine Spannklammer (87) aufweist, eine Haube (30) mit zum Tragrahmen komplementärer Form, wobei die Haube den Tragrahmen schließt, und ein elektronisches Gleichrichtermodul (46) enthält, das radial bezüglich des Jochs (35) versetzt ist, wobei das elektronische Gleichrichtermodul (46) sich in einer Fläche eines drehsymmetrischen Zylinders erstreckt, der auf eine Achse (X3) des Stators (16) parallel zum Joch (35) zentriert ist und sich in einem radialen Abstand zur Achse (X3) des Stators (16) größer als derjenige des Jochs (35) befindet, und auf das Halteorgan (26) des Stators (16) oder die Haube (30) montiert ist.

2. Rotierende elektrische Maschine nach Anspruch 1, **dadurch gekennzeichnet, dass** Phasenausgänge (171) einer Wicklung (40) auf zwei axiale Enden des Stators (16) verteilt sind.

3. Rotierende elektrische Maschine nach Anspruch 1 oder 2, **dadurch gekennzeichnet, dass** Phasenausgänge (171) einer Wicklung (40) bezüglich der Achse (X3) des Stators (16) um einen Winkel zwischen 45 und 120 Grad gekrümmt sind.

4. Rotierende elektrische Maschine nach Anspruch 3, **dadurch gekennzeichnet, dass** die Phasenausgänge bezüglich der Achse (X3) des Stators (16) um einen Winkel von 90 Grad gekrümmt sind.

5. Rotierende elektrische Maschine nach Anspruch 1, **dadurch gekennzeichnet, dass** das Halteorgan (26) das elektronische Gleichrichtermodul (46) durch Konduktion kühlen kann.

6. Rotierende elektrische Maschine nach Anspruch 5, **dadurch gekennzeichnet, dass** das Halteorgan (26) eine Kühlvorrichtung (100) enthält, um Kalorien vom Halteorgan (26) abzuführen.

7. Rotierende elektrische Maschine nach Anspruch 6, **dadurch gekennzeichnet, dass** die Kühlvorrichtung (100) im Halteorgan (26) ausgesparte Kanäle (102) enthält, um eine Strömung einer Kühlflüssigkeit zu ermöglichen.

8. Maschine nach Anspruch 6 oder 7, **dadurch gekennzeichnet, dass** die Kühlvorrichtung (100) Konvektionskühleinrichtungen enthält, die Lamellen (101) aufweisen.

9. Rotierende elektrische Maschine nach Anspruch 1, **dadurch gekennzeichnet, dass** die Haube (30) Kühlkanäle aufweist, in denen eine Kühlflüssigkeit strömt.

10. Rotierende elektrische Maschine nach Anspruch 1 oder 9, **dadurch gekennzeichnet, dass** die Haube (30) aufgeformte Spuren (174) aufweist, die dazu bestimmt sind, elektrisch mit dem elektronischen Gleichrichtermodul (46) verbunden zu werden.

11. Rotierende elektrische Maschine nach einem der Ansprüche 1 bis 10, **dadurch gekennzeichnet, dass** die rotierende elektrische Maschine Erzeugungseinrichtungen (177) eines axialen Zwangsluftstroms enthält, die einen Luftstrom (F3, F4) erzeugen können, der radial abgeführt wird, nachdem er das elektronische Gleichrichtermodul (46) durch Konvektion gekühlt hat.

12. Rotierende elektrische Maschine nach Anspruch 11, **dadurch gekennzeichnet, dass** die Erzeugungseinrichtungen (177) eines axialen Zwangsluftstroms mindestens ein auf den Rotor (12) montiertes Gebläse (178) aufweisen, das axial Frischluft ansaugen kann, um sie zum elektronischen Gleichrichtermodul (46) zu fördern.

## Claims

1. Rotating electrical machine, comprising a stator (16) equipped with a yoke (35) and a rotor (12) mounted on a shaft (13), said rotating electrical machine further comprising a cradle (11) comprising a bearing surface (20) of the stator (16), a bearing member (26) of the stator (16) comprising a bearing claw (87), a cover (30) with a form complementing the cradle, the cover closing said cradle and an electronic rectifier module (46) offset radially relative to said yoke (35), said electronic rectifier module (46) extending in a surface of a cylinder of revolution centred on an axis (X3) of the stator (16) parallel to the yoke (35) and located at a radial distance from the axis (X3) of the stator (16) greater than that of said yoke (35) and being mounted on the bearing member (26) of the stator (16) or on the cover (30) .

2. Rotating electrical machine according to Claim 1, **characterized in that** phase outputs (171) of a winding (40) are distributed at two axial ends of the stator (16).

3. Rotating electrical machine according to Claim 1 or 2, **characterized in that** phase outputs (171) of a winding (40) are curved relative to the axis (X3) of the stator (16) through an angle of between 45 and 120 degrees.

4. Rotating electrical machine according to Claim 3, **characterized in that** the phase outputs are curved relative to the axis (X3) of the stator (16) through an angle of 90 degrees.

5. Rotating electrical machine according to Claim 1, **characterized in that** the bearing member (26) is capable of cooling the electronic rectifier module (46) by conduction.

6. Rotating electrical machine according to Claim 5, **characterized in that** the bearing member (26) comprises a cooling device (100) for evacuating heat from the bearing member (26).

7. Rotating electrical machine according to Claim 6, **characterized in that** the cooling device (100) comprises conduits (102) made in the bearing member (26) such as to allow a circulation of a cooling liquid.

8. Machine according to Claim 6 or 7, **characterized in that** the cooling device (100) comprises means for cooling by convection comprising fins (101).

9. Rotating electrical machine according to Claim 1, **characterized in that** the cover (30) comprises cooling channels in which a cooling liquid circulates.

10. Rotating electrical machine according to Claim 1 or 9, **characterized in that** the cover (30) comprises overmoulded traces (174) designed to be electrically connected to said electronic rectifier module (46).

11. Rotating electrical machine according to any one of Claims 1 to 10, **characterized in that** the rotating electrical machine comprises means (177) for generating a forced axial air flow that are capable of generating an air flow (F3, F4) evacuating radially after having cooled the electronic rectifier module (46) by convection.

12. Rotating electrical machine according to Claim 11, **characterized in that** the means (177) for generating a forced axial air flow comprise at least one fan (178) mounted on said rotor (12) capable of axially aspirating cool air such as to drive it back towards said electronic rectifier module (46).
